(19) Europäisches Patentamt
European Patent Office
Office européen des brevets

(11) **EP 3 735 105 A1**

(12) **EUROPEAN PATENT APPLICATION**
published in accordance with Art. 153(4) EPC

(43) Date of publication:
**04.11.2020 Bulletin 2020/45**

(51) Int Cl.:
**H05B 3/20** *(2006.01)*    **B60J 1/00** *(2006.01)*
**B60S 1/02** *(2006.01)*    **C03C 27/12** *(2006.01)*
**H05B 3/84** *(2006.01)*

(21) Application number: **18893839.3**

(22) Date of filing: **27.12.2018**

(86) International application number:
**PCT/JP2018/048296**

(87) International publication number:
**WO 2019/131928 (04.07.2019 Gazette 2019/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2017 JP 2017254066**

(71) Applicant: **Kuraray Co., Ltd.**
**Kurashiki-shi, Okayama 710-0801 (JP)**

(72) Inventors:
• **YASUDA, Hirotaka**
  **Kurashiki-shi, Okayama 713-8550 (JP)**
• **ISOUE, Koichiro**
  **Kurashiki-shi, Okayama 713-8550 (JP)**

(74) Representative: **Müller-Boré & Partner**
**Patentanwälte PartG mbB**
**Friedenheimer Brücke 21**
**80639 München (DE)**

(54) **COMPOSITE FILM HAVING ELECTRONIC MEMBER ATTACHMENT REGION**

(57)    To provide a composite film which comprises a heat-generating conductive structure and is suitable for a laminated glass that can achieve both of the heating of the whole area of the laminated glass and the efficient heating of a region surrounding an electronic member (e.g., a camera, a sensor, an antenna) while keeping the good sensitivity of the electronic member.

A composite film comprising: a resin film; and a heat-generating conductive structure arranged on the resin film and comprising at least a plurality of main conductive fine wires, wherein the composite film has at least one electronic member attachment region not comprising the plurality of main conductive fine wires.

Figure 1

**Description**

TECHNICAL FIELD

The present invention relates to a composite film having an electronic member attachment region and comprising a heat-generating conductive structure. The present invention also relates to a laminated glass having the composite film arranged between at least two glasses.

BACKGROUND ART

In recent years, automobiles in each of which an electronic member utilizing infrared ray, e.g., a camera, a sensor, and an antenna, is attached to a windshield or a front glass have been widespread. The snow melting or frost removal in a region to which the electronic member is attached is important for the improvement in the performance of the electronic member. As the method for heating a region surrounding the electronic member, the following methods are known for example: a method in which a heating wire is provided around a region to which an electronic member is to be attached (Patent Document 1); and a method in which a portion of grid-shaped heating wires is removed to provide a region to which a sensor or the like is to be attached in a window glass material, thereby forming an electrically heating window (Patent Document 2).

PRIOR ART DOCUMENT

PATENT DOCUMENT

Patent Document 1: JP-A-2010-534588
Patent Document 2: JP-A-2013-503424

SUMMARY OF THE INVENTION

PROBLEMS TO BE SOLVED BY THE INVENTION

However, according to the studies made by the present inventors, although the above methods intend to heat a region surrounding an electronic member, the heating of the whole area of a window shield cannot be achieved in the method disclosed in the method of Patent Document 1 and the efficient heating of a region surrounding an electronic member is insufficient because of the removal of a portion of the grid in the method of Patent Document 2,. In addition, in both of the documents, relatively thick wires are used as heating wires and, therefore, there is the possibility that short-circuit might occur if the density of the wires is increased for the purpose of improving the heating efficiency. Furthermore, the present inventors found that there are some restrictions in the designing of a wind shield or the like, such as the necessity of applying a black paint in order to conceal the wires.

In these situations, in a broad aspect, the object of the present invention is to provide a composite film which comprises a heat-generating conductive structure and is suitable for a laminated glass that can achieve both of the heating of the whole area of the laminated glass and the efficient heating of a region surrounding an electronic member (e.g., a camera, a sensor, an antenna) while keeping the good sensitivity of the electronic member.

In a more limited aspect, the object of the present invention is to provide a composite film which comprises a heat-generating conductive structure and is suitable for a laminated glass that has further improved efficiency of the heating of a region surrounding an electronic member, cannot obstruct the view of a driver, needs not the application of a black paint and has improved flexibility of positioning (design performance) of the electronic member.

SOLUTIONS TO THE PROBLEMS

The present inventors have made intensive and extensive studies. As a result, it is found that the above-mentioned problems can be solved by the below-described composite film of the present invention.

The present invention includes the following preferred embodiments.

[1] A composite film comprising:

a resin film; and

a heat-generating conductive structure arranged on the resin film and comprising at least a plurality of main conductive fine wires,

wherein the composite film has at least one electronic member attachment region not comprising the plurality of main conductive fine wires.

[2] The composite film according to [1], wherein two main bus bars are arranged at opposing positions to each other on the resin film, and the main bus bars each are electrically connected to terminals of the plurality of main conductive fine wires.

[3] The composite film according to [1] or [2], wherein each of the plurality of main conductive fine wires extends in a non-linear shape on the resin film.

[4] The composite film according to [3], wherein the non-linear shape is a wholly or partly wavy shape and/or a wholly or partly zig-zag shape.

[5] The composite film according to any one of [1] to [4], wherein at least one surface of the heat-generating conductive structure is low-reflectance-treated.

[6] The composite film according to any one of [2] to [5], wherein at least one of the electronic member attachment regions is present in a region between the two main bus bars.

[7] The composite film according to any one of [2] to [5], wherein at least one of the electronic member attachment regions is present in a region other than the region between the two main bus bars.

[8] The composite film according to any one of [1] to [7],

wherein the heat-generating conductive structure further comprises auxiliary conductive fine wires each of which electrically connects adjacent two of the main conductive fine wires to each other, and

wherein two or more of approximately rectangular or trapezoidal regions, each formed by two sides composed of adjacent two of the main conductive fine wires and two sides composed of adjacent two of the auxiliary conductive fine wires which are present between the two sides composed of adjacent two of the main conductive fine wires, have different shapes from each other.

[9] The composite film according to any one of [2] to [8], wherein, in the region between the two main bus bars, an average space interval between the adjacent main conductive fine wires comprised in a region within 2 cm from the periphery of the electronic member attachment region present in the region between the two main bus bars is smaller than an average space interval between the adjacent main conductive fine wires comprised in the whole area of the composite film.

[10] The composite film according to any one of [2] to [9], wherein the average space interval between the adjacent main conductive fine wires comprised in a region within 2 cm from the periphery of the electronic member attachment region present in the region between the two main bus bars is 0.1 mm or more and 5 mm or less.

[11] The composite film according to any one of [2] to [10], wherein a portion of the main bus bar is curved so as to surround 1/4 or more of the periphery of the electronic member attachment region.

[12] The composite film according to any one of [2] to [11], wherein at least one auxiliary bus bar is further arranged on the resin film so as to surround 1/4 or more of the periphery of the electronic member attachment region present in the region between the two main bus bars, and wherein the at least one auxiliary bus bar is electrically connected to the two main bus bars through the main conductive fine wires.

[13] The composite film according to any one of [1] to [12], wherein the thickness of the resin film is 0.3 mm or less.

[14] The composite film according to any one of [1] to [13], wherein the highest temperature among the melting point and the glass transition temperature of a resin composition constituting the resin film is 30°C or higher and 180°C or lower.

[15] The composite film according to any one of [2] to [14], wherein the thickness of each connecting part between the main conductive fine wire and the main bus bar is smaller than a total of the thickness of the main conductive fine wire and the thickness of the main bus bar.

[16] The composite film according to any one of [1] to [15], wherein the heat-generating conductive structure consists of an etching structure of a metal foil.

[17] A laminated glass comprising the composite film according to any one of [1] to [16] intercalated between at least two glasses.

[18] The laminated glass according to [17], wherein a camera, a sensor or an antenna is attached to the electronic member attachment region.

EFFECTS OF THE INVENTION

In a broad aspect, by producing a laminated glass using the composite film of the present invention, it is possible to achieve both of the heating of the whole area of the laminated glass and the efficient heating of a region surrounding an electronic member while keeping the good sensitivity of the electronic member.

In a more limited aspect, it is possible to achieve the further improvement in the efficiency of the heating of a region surrounding an electronic member, the securing of a good view of a driver, the elimination of the necessity to apply a black paint and the improvement in the flexibility of positioning (design performance) of the electronic member in the laminated glass.

BRIEF DESCRIPTION OF THE DRAWINGS

Fig. 1 is a schematic illustration showing one example of the configuration of the heat-generating conductive structure and the main bus bars in the composite film of the present invention.

Fig. 2 is a schematic illustration showing one example of the configuration of the heat-generating conductive structure and the main bus bars in the composite film of the present invention.

Fig. 3 is a schematic illustration showing one example of the configuration of the heat-generating conductive structure, the main bus bars and the auxiliary bus bars in the composite film of the present invention.

Fig. 4 is a schematic illustration showing one example of the configuration of the heat-generating conductive structure, the main bus bars and the auxiliary bus bar in the composite film of the present invention.

Fig. 5 is a schematic illustration showing one example of the configuration of the heat-generating conductive structure, the main bus bars and the auxiliary bus bar in the composite film of the present invention.

Fig. 6 is a schematic illustration showing one example of the configuration of the heat-generating conductive structure and the main bus bars in the composite film comprising no electronic member attachment region.

Fig. 7 is an illustration showing one example of the projected cross-sectional area of the heat-generating conductive structure which is projected from the surface of the composite film, and explaining the relationship between the projected cross-sectional areas of the main conductive fine wires and the projected cross-sectional areas of the auxiliary conductive fine wires.

Fig. 8 is an illustration showing one example of the projected cross-sectional area of the heat-generating conductive structure which is projected from the surface of the composite film, and explaining the relationship between projected cross-sectional areas of the auxiliary conductive fine wires in each of the regions contacting with the two main bus bars.

EMBODIMENTS OF THE INVENTION

[Composite film]

The composite film of the present invention comprises a resin film, and a heat-generating conductive structure which is arranged on the resin film and comprises at least a plurality of main conductive fine wires. The composite film has at least one electronic member attachment region which does not comprise the plurality of main conductive fine wires.

<Resin film>

The resin film in the present invention is composed of a resin composition comprising a resin and optionally a plasticizer and another additive. The content of the resin is preferably 70% by mass or more, more preferably 75% by mass or more, particularly preferably 80% by mass or more, based on the total mass of the resin composition. Particularly in a case where the resin is a polyvinyl acetal resin, an ionomer resin or an ethylene-(vinyl acetate) copolymer, the content of the resin is preferably 75% by mass or more based on the total mass of the resin composition. The upper limit of the content of the resin is 1 00% by mass or less based on the total mass of the resin composition.

Examples of the resin include a polyvinyl acetal resin such as a polyvinyl butyral resin, an ethylene-(vinyl acetate) copolymer, an ionomer resin, a polycarbonate, polymethyl methacrylate, polystyrene, a cycloolefin polymer and copolymers thereof. Among these resins, a polyvinyl acetal resin, an ionomer resin and an ethylene-(vinyl acetate) copolymer are preferred, a polyvinyl acetal resin and an ionomer resin are more preferred, a polyvinyl acetal resin is still more preferred, and a polyvinyl butyral resin is particularly preferred, from the viewpoint that a window glass having high penetration resistance and a small head injury criterion and particularly being suitable as a window glass for vehicles can be more readily produced. In a case where a plasticized polyvinyl acetal resin film is used in combination in the production of a laminated glass, it is preferred that the resin contained in the resin film is the same type as that used in the plasticized polyvinyl acetal resin film, from the viewpoint that the bondability between the films used in combination can be good, the difference in refractive index between the resin films can be reduced, and the optical strain at the interface between the resin films can be more readily reduced.

In a case where the resin contained in the resin film is a polyvinyl acetal resin, the resin film may contain a single polyvinyl acetal resin, or may contain two or more polyvinyl acetal resins that are different from each other with respect to at least one item selected from the viscosity average polymerization degree, the acetalization degree, the acetyl group amount, the hydroxyl group amount, the ethylene content, the molecular weight of an aldehyde used for the acetalization and the chain length. In a case where the resin film contains different two or more polyvinyl acetal resins, it is preferred that the polyvinyl acetal resins are in the form of a mixture of at least two polyvinyl acetal resins having different viscosity average polymerization degrees from each other or an acetalization product of a mixture of at least two polyvinyl alcohols or ethylene-(vinyl alcohol) copolymers having different viscosity average polymerization degrees from each other, from the viewpoint of the easiness of melt molding and the viewpoint of preventing the deformation of the heat-generating conductive structure during the production of a laminated glass, the misalignment of glasses during the use of the laminated glass or the like.

Examples of the method for producing the polyvinyl acetal resin used in the present invention include the following method. Firstly, an aqueous solution containing polyvinyl alcohol or an ethylene-(vinyl alcohol) copolymer at a concentration of 3 to 30% by mass is retained in a temperature range of 80 to 100°C, and is then cooled gradually over 10 to 60 minutes. When the temperature is decreased to -10 to 30°C, an aldehyde (or a keto compound) and an acid catalyst are added to the solution, and then an acetalization reaction is carried out for 30 to 300 minutes while keeping the temperature constant Subsequently, the reaction solution is heated to a temperature of 20 to 80°C over 30 to 200 minutes, and then the reaction solution is retained at this temperature for 30 to 300 minutes. Subsequently, the reaction solution is optionally filtrated, and is then neutralized by adding a neutralizing agent such as an alkali to the reaction solution, and then the resultant resin is filtrated out, is then washed with water, and dried. In this manner, a polyvinyl acetal resin used in the present invention can be produced.

As the acid catalyst used in the acetalization reaction, an organic acid and an inorganic acid may be used. Examples of the acid catalyst include acetic acid, para-toluenesulfonic acid, hydrochloric acid, sulfuric acid and nitric acid. Among these acid catalysts, from the viewpoint of acidic strength and easiness of the removal during washing, hydrochloric acid, sulfuric acid and nitric acid are preferably used.

The polyvinyl alcohol that is a raw material for the polyvinyl acetal resin can be produced by a conventional publicly-known technique, i.e., by polymerizing a carboxylic acid vinyl ester compound such as vinyl acetate and then saponifying the resultant polymer. As the method for polymerizing the carboxylic acid vinyl ester compound, a conventional publicly-known method can be employed, such as a solution polymerization method, a block polymerization method, a suspension polymerization method and an emulsion polymerization method. A polymerization initiator can be selected appropriately from an azo-type initiator, a peroxide-type initiator, a redox-type initiator and others depending on the type of the polymerization method to be employed. As the saponification reaction, an alcoholysis reaction, a hydrolysis reaction or the like using a conventional publicly-known alkaline or acid catalyst can be employed.

The vinyl alcohol copolymer that is a raw material for the polyvinyl acetal resin can be produced by the saponification of a copolymer of a vinyl ester and another monomer. Examples of the another monomer include: an $\alpha$-olefin such as ethylene, propylene, n-butene and isobutylene; acrylic acid or a salt thereof; an acrylic acid ester such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate and octadecyl acrylate; methacrylic acid or a salt thereof; a methacrylic acid ester such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate and octadecyl methacrylate; acrylamide; an acrylamide derivative such as N-methylacrylamide, N-ethylacrylamide, N,N-dimethylacrylamide, diacetoneacrylamide, acrylamide propanesulfonic acid or a salt thereof, acrylamide propyldimethylamine or a salt or quaternary salt thereof, and N-methylolacrylamide or a derivative thereof, methacrylamide, a methacrylamide derivative such as N-methylmethacrylamide, N-ethylmethacrylamide, methacrylamide propanesulfonic acid or a salt thereof, methacryamide propyldimethylamine or a salt or quaternary salt thereof, and N-methylolmethacrylamide or a derivative thereof; a vinyl ether such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether and stearyl vinyl ether; a nitrile such as acrylonitrile and methacrylonitrile; a vinyl halide such as vinyl chloride and vinyl fluoride; a vinylidene halide such as vinylidene chloride and vinylidene fluoride; an allyl compound such as allyl acetate and ally chloride; an unsaturated dicarboxylic acid such as maleic acid, itaconic acid and fumaric acid, or a salt, ester or anhydride thereof; a vinylsilyl compound such as vinyltrimethoxysilane; and isopropenyl acetate. These another monomers may be used singly, or two or more of them may be used in combination. Among these monomers, ethylene is preferred as the another monomer.

From the viewpoint of more readily obtaining a polyvinyl acetal resin that exhibits excellent penetration resistance when formed into a laminated glass, the aldehyde (or keto compound) used in the production of the polyvinyl acetal resin is preferably a linear, branched or cyclic compound, more preferably a linear or branched compound, having 2 to 10 carbon atoms. As a result, an appropriate linear or branched acetal group can be obtained. The polyvinyl acetal resin used in the present invention may also be an acetalization product produced by the acetalization of a polyvinyl alcohol or an ethylene-(vinyl alcohol) copolymer with a mixture of a plurality of aldehydes (or keto compounds). Each of the polyvinyl alcohol and the vinyl alcohol copolymer may be a single compound, or may be a mixture of polyvinyl alcohols or vinyl alcohol copolymers that are different from each other with respect to the viscosity average polymerization degree, hydrolysis degree or the like.

The polyvinyl acetal resin used in the resin film is preferably a polyvinyl acetal resin produced by the reaction between at least one polyvinyl alcohol and at least one aliphatic non-branched aldehyde having 2 to 10 carbon atoms. If the number of carbon atoms in the aldehyde is more than 12, the acetalization reactivity may be deteriorated, and the blocking of the polyvinyl acetal resin may easily occur during the reaction, resulting in the difficulty of the production of the polyvinyl acetal resin.

Examples of the aldehyde used in the acetalization reaction include aliphatic, aromatic and alicyclic aldehydes, such as formaldehyde, acetaldehyde, propionaldehyde, n-butyraldehyde, isobutyraldehyde, valeraldehyde, isovaleraldehyde, n-hexylaldehyde, 2-ethylbutyraldehyde, n-heptylaldehyde, n-octylaldehyde, 2-ethyhexylaldehyde, n-nonylaldehyde, n-decylaldehyde, benzaldehyde and cinnamaldehyde. Among these compounds, an aliphatic non-branched aldehyde having 2 to 6 carbon atoms is preferred, and n-butyraldehyde is particularly preferred from the viewpoint that a polyvinyl acetal resin providing excellent penetration resistance when formed into a laminated glass can be more readily produced. These aldehydes may be used singly, or two or more of them may be used in combination. In addition, a polyfunctional aldehyde or an aldehyde having another functional group may also be used in combination in an amount of as small as 20% by mass or less relative to the total mass of all of the aldehydes. In a case where n-butyraldehyde is used in combination with an aldehyde having another functional group, the content of n-butyraldehyde is preferably 50% by mass or more, more preferably 80% by mass or more, still more preferably 95% by mass or more, particularly preferably 99% by mass or more, most preferably 100% by mass.

The viscosity average polymerization degree of the polyvinyl alcohol that serves as a raw material for the polyvinyl acetal resin is preferably 100 or more, more preferably 300 or more, more preferably 400 or more, still more preferably 600 or more, particularly preferably 700 or more, most preferably 750 or more. When the viscosity average polymerization degree of the polyvinyl alcohol is equal to or more than the above-mentioned lower limit value, the deformation or disconnection of the heat-generating conductive structure during the production of a laminated glass can be more readily inhibited and the occurrence of the phenomenon that glasses are misaligned due to heat in the resultant laminated glass can be more readily prevented. The viscosity average polymerization degree of the polyvinyl alcohol is preferably 5000 or less, more preferably 3000 or less, still more preferably 2500 or less, particularly preferably 2300 or less, most preferably 2000 or less. When the viscosity average polymerization degree of the polyvinyl alcohol is equal to or less than the above-mentioned upper limit value, good film formability can be more readily achieved. The viscosity average polymerization degree of the polyvinyl alcohol can be measured in accordance with, for example, JIS K 6726 "Polyvinyl alcohol Test Method".

The numerical value of the preferred viscosity average polymerization degree of the polyvinyl alcohol is the same as that of the produced polyvinyl acetal resin. In a case where the resin film contains different two or more polyvinyl acetal resins, it is preferred that the viscosity average polymerization degree of at least one of the polyvinyl acetal resins is equal to or more than the above-mentioned lower limit value and equal to or less than the above-mentioned upper limit value.

The acetyl group amount (which means the amount of a vinyl acetate unit, hereinafter) in the polyvinyl acetal resin contained in the resin film is preferably 0.1 to 20% by mole, more preferably 0.5 to 3% by mole, still more preferably 0.5 to 3% by mole or 5 to 8% by mole, based on the ethylene units in the polyvinyl acetal main chain, i.e., based on a repeating unit that is a unit composed of two carbon atoms in the main-chain (e.g., a vinyl alcohol unit, a vinyl acetate unit, an ethylene unit) of the polyvinyl alcohol resin that is a raw material for the production of the polyvinyl acetal resin. The acetyl group amount can be adjusted to a value falling within the above-mentioned range by appropriately adjusting the degree of saponification of the polyvinyl alcohol or the ethylene-(vinyl alcohol) copolymer that is a raw material. The acetyl group amount can have influence on the polarity of the polyvinyl acetal resin, and the compatibility with a plasticizer in the resin film and the mechanical strength of the resin film can vary. When the resin film contains a polyvinyl acetal resin having an acetyl group amount falling within the above-mentioned range, in a case where a plasticized polyvinyl acetal resin film is used in combination in the production of a laminated glass, good bondability with the plasticized polyvinyl acetal resin film, the reduction in optical strain and the like can be more readily achieved. In a case where the polyvinyl acetal resin film contains different two or more polyvinyl acetal resins, it is preferred that the acetyl group amount of at least one of the polyvinyl acetal resins falls within the above-mentioned range.

The acetalization degree of the polyvinyl acetal resin contained in the resin film is, for example, preferably 40 to 86% by mole, more preferably 45 to 84% by mole, more preferably 50 to 82% by mole, still more preferably 60 to 82% by mole, particularly preferably 68 to 82% by mole. The acetalization degree refers to, based on a repeating unit that is a unit composed of two carbon atoms in the main-chain (e.g., a vinyl alcohol unit, a vinyl acetate unit, an ethylene unit) of the polyvinyl alcohol resin that is a raw material for the production of the polyvinyl acetal resin, the amount of the above unit forming an acetal moiety. The acetalization degree can be adjusted to a value falling within the above-mentioned range by appropriately adjusting the amount of the aldehyde used in the acetalization of the polyvinyl alcohol resin. When the acetalization degree falls within the above-mentioned range, the mechanical strength of the composite film of the present invention can be more readily sufficient and, in a case where the resin film contains a plasticizer, the compatibility between the polyvinyl acetal resin and the plasticizer can be less likely to be deteriorated. In a case where the resin film contains two or more different polyvinyl acetal resins, it is preferred that the acetalization degree of at least one of the polyvinyl acetal resins falls within the above-mentioned range.

The hydroxyl group amount (which refers to the amount of a vinyl alcohol unit, hereinafter) of the polyvinyl acetal resin contained in the resin film is preferably 9 to 36% by mole, more preferably 18 to 34% by mole, still more preferably 22 to 34% by mole, particularly preferably 26 to 34% by mole, based on the ethylene units in the polyvinyl acetal main chain. When the hydroxyl group amount falls within the above-mentioned range, in a case where a plasticized polyvinyl acetal resin film is used in combination in the production of a laminated glass, the difference in refractive index between the resin film and the plasticized polyvinyl acetal resin film can be reduced and a laminated glass having less optical unevenness can be more readily produced. On the other hand, furthermore, in order to provide sound insulation performance as well, the range of the hydroxyl group amount is preferably 9 to 30% by mole, more preferably 12 to 27% by mole, still more preferably 15 to 23% by mole, particularly preferably 16 to 22% by mole. The hydroxyl group amount can be adjusted to a value falling within the above-mentioned range by adjusting the amount of the aldehyde used in the acetalization of the polyvinyl alcohol resin. In a case where the resin film contains different two or more polyvinyl acetal resins, it is preferred that the hydroxyl group amount of at least one of the polyvinyl acetal resins falls within the above-mentioned range.

The polyvinyl acetal resin is generally composed of an acetal group unit, a hydroxyl group unit and an acetyl group unit. The amount of each of the units can be determined by, for example, JIS K 6728 "Polyvinyl butyral test method" or a nuclear magnetic resonance method (NMR).

In a case where the polyvinyl acetal resin contains units other than an acetal group unit, the amount of the acetal group unit in the polyvinyl acetal resin can be calculated by determining both of the amount of a hydroxyl group unit and the amount of an acetyl group unit and then subtracting the amounts of both of these units from the amount of the acetal group unit in the polyvinyl acetal resin not comprising units other than the acetal group unit

The viscosity of a toluene/ethanol=1/1 (by mass) solution containing the polyvinyl acetal resin contained in the resin film at a concentration of 10% by mass is preferably 100 mPa·s or more, more preferably 120 mPa·s or more, still more preferably 130 mPa·s or more, particularly preferably 150 mPa·s or more, which is measured with a Brookfield-type (B-type) viscometer at 20°C, 30 rpm. By using a polyvinyl acetal resin produced by use of a polyvinyl alcohol having a high viscosity average polymerization degree as a raw material or as a part of raw materials, or by using such a polyvinyl acetal resin in combination, the above viscosity can be adjusted to a value equal to or more than the above-mentioned lower limit value. In a case where the polyvinyl acetal resin contained in the resin film comprises a mixture of a plurality of resins, it is preferred that the viscosity of the mixture is equal to or more than the above-mentioned lower limit value. When the viscosity of the polyvinyl acetal resin is equal to or more than the above-mentioned lower limit value, the deformation or disconnection of the heat-generating conductive structure during the production of a laminated glass can be more readily inhibited and the occurrence of the phenomenon that glasses are misaligned due to heat in the resultant laminated glass can be more readily prevented.

The viscosity is generally 1500 mPa·s or less, preferably 1300 mPa·s or less, more preferably 1100 mPa·s or less, still more preferably 1000 mPa·s or less, particularly preferably 800 mPa·s or less, from the viewpoint that good film formability can be more readily achieved.

The number average molecular weight of the polyvinyl acetal resin contained in the resin film is preferably 115,000 to 200,000, more preferably 120,000 to 160,000, particularly preferably 130,000 to 150,000. By using a polyvinyl acetal resin produced by use of a polyvinyl alcohol having a high viscosity average polymerization degree as a raw material or as a part of raw materials, or by using such a polyvinyl acetal resin in combination, the above number average molecular weight can be adjusted to a value falling within the above-mentioned range. When the number average molecular weight of the polyvinyl acetal resin falls within the above-mentioned range, preferable film formability and preferable film physical properties (e.g., laminating suitability, creep resistance, breaking strength) can be more readily achieved.

The molecular weight distribution, i.e., the ratio (Mw/Mn) of the weight average molecular weight (Mw) to the number average molecular weight (Mn), of the polyvinyl acetal resin contained in the resin film is preferably 2.7 or more, more preferably 2.8 or more, particularly preferably 2.9 or more. The molecular weight distribution can be adjusted to a value equal to or more than the above-mentioned lower limit value by acetalizing a mixture of polyvinyl alcohols having different viscosity average polymerization degrees or mixing acetalized products of polyvinyl alcohols having different viscosity average polymerization degrees with each other. When the molecular weight distribution of the polyvinyl acetal resin is equal to or more than the above-mentioned lower limit value, both of film formability and preferable film physical properties (e.g., laminating suitability, creep resistance, breaking strength) can be more readily achieved. The upper limit value of the molecular weight distribution is not particularly limited. For example, from the viewpoint of easiness of film formation, the molecular weight distribution is generally 10 or less, preferably 5 or less.

In a case where the resin film contains different two or more polyvinyl acetal resins, it is preferred that the number average molecular weight and the molecular weight distribution of at least one of the polyvinyl acetal resins fall within the above-mentioned ranges.

Each of the number average molecular weight and the molecular weight distribution can be determined, for example, by employing gel permeation chromatography (GPC) using polystyrene having a known molecular weight as a standard.

From the viewpoint that good film formability can be more readily obtained, the resin film preferably contains an uncrosslinked polyvinyl acetal. The resin film may also contain a crosslinked polyvinyl acetal. The method for crosslinking a polyvinyl acetal is disclosed in, for example, EP 1527107 B1 and WO 2004/063231 A1 ("Thermal self-crosslinking of polyvinyl acetal containing carboxyl group"), EP 1606325 A1 ("Polyvinyl acetal crosslinked with polyaldehyde"), and WO 2003/020776 A1 ("Polyvinyl acetal crosslinked with glyoxylic acid"). A method is also effective, in which the conditions for the acetalization reaction are appropriately modified to adjust the amount of formed intermolecular acetal bonds or adjust the degree of blocking of remaining hydroxyl groups.

In a case where the resin contained in the resin film is an ethylene-(vinyl acetate) copolymer, in the ethylene-(vinyl acetate) copolymer resin, the ratio of the amount of a vinyl acetate moiety to the total amount of an ethylene moiety and the vinyl acetate moiety is preferably less than 50% by mole, more preferably less than 30% by mole, still more preferably less than 20% by mole, particularly preferably less than 15% by mole. When the ratio of the amount of the vinyl acetate moiety to the total amount of the ethylene moiety and the vinyl acetate moiety is less than 50% by mole, mechanical strength and flexibility required for the resin film can be exerted preferably and more readily.

Examples of the ionomer resin contained in the resin film include a resin having a constituent unit derived from ethylene and a constituent unit derived from an $\alpha,\beta$-unsaturated carboxylic acid, wherein at least a part of the constituent unit derived from an $\alpha,\beta$-unsaturated carboxylic acid is neutralized with a metal ion such as a sodium ion. In an ethylene-($\alpha,\beta$-unsaturated carboxylic acid) copolymer before the neutralization with the metal ion, the content of the $\alpha,\beta$-unsaturated carboxylic acid-derived constituent unit is preferably 2% by mass or more, more preferably 5% by mass or more, based on the mass of the ethylene-(a,p-unsaturated carboxylic acid) copolymer. The content of the $\alpha,\beta$-unsaturated carboxylic acid-derived constituent unit is preferably 30% by mass or less, more preferably 20% by mass or less. Examples of the $\alpha,\beta$-unsaturated carboxylic acid-derived constituent unit in the ionomer resin include constituent units respectively derived from acrylic acid, methacrylic acid, maleic acid, monomethyl maleate, monoethyl maleate and anhydrous maleic acid. Among these constituent units, a constituent unit derived from acrylic acid or methacrylic acid is particularly preferred. From the viewpoint of the easy availability, the ionomer resin is more preferably an ionomer of an ethylene-(acrylic acid) copolymer and an ionomer of an ethylene-(methacrylic acid) copolymer, and particularly preferably a zinc ionomer of an ethylene-(acrylic acid) copolymer, a sodium ionomer of an ethylene-(acrylic acid) copolymer, a zinc ionomer of an ethylene-(methacrylic acid) copolymer and a sodium ionomer of an ethylene-(methacrylic acid) copolymer.

In the present invention, the resin film may contain a plasticizer. The amount of the plasticizer in the resin film is preferably 0 to 30% by mass, more preferably 0 to 25% by mass, particularly preferably 0 to 20% by mass, based on the total mass of the resin composition constituting the resin film. When the amount of the plasticizer falls within the above-mentioned range, a resin film having excellent film formability and handling properties can be more readily produced, the deformation and disconnection of a conductive structure during the production of a laminated glass by use of a composite film having such a resin film can be more readily inhibited and, as a result, good electrical conductivity can be more readily achieved.

In a case where the resin composition constituting the resin film contains a plasticizer, it is preferred to use one or more compounds selected from the following groups as the plasticizer. - An ester of a polyvalent aliphatic or aromatic acid. Examples of the ester include a dialkyl adipate (e.g., dihexyl adipate, di-2-ethylbutyl adipate, dioctyl adipate, di-2-ethylhexyl adipate, hexylcylcohexyl adipate, heptyl adipate, nonyl adipate, diisononyl adipate, heptyl nonyl adipate); an ester of adipic acid and an alcohol or an alcohol containing an ether compound (e.g., di(butoxyethyl) adipate, di(butoxyethoxyethyl) adipate); a dialkyl sebacate (e.g., dibutyl sebacate); an ester of sebacic acid and an alicyclic alcohol or an alcohol containing an ether compound; an ester ofphthalic acid (e.g., butylbenzyl phthalate, bis-2-butoxyethyl phthalate); and an ester of an alicyclic polycarboxylic acid and an aliphatic alcohol (e.g., 1,2-cyclohexanedicaroboxylic acid diisononyl ester).

- An ester or ether of a polyhydric aliphatic or aromatic alcohol or an oligoether glycol having one or more aliphatic or aromatic substituents. Examples of the ester or ether include an ester of glycerin, diglycol, triglycol, tetraglycol or the like and a linear or branched, aliphatic or alicyclic carboxylic acid. More specified examples of the ester include diethylene glycol-bis-(2-ethylhexanoate), triethylene glycol-bis-(2-ethylhexanoate), triethylene glycol-bis-(2-ethylbutanoate), tetraethylene glycol-bis-n-heptanoate, triethylene glycol-bis-n-heptanoate, triethylene glycol-bis-n-hexanoate, tetraethylene glycol dimethyl ether and dipropylene glycol benzoate.
- A phosphoric acid ester of an aliphatic or aromatic alcohol. Examples of the phosphoric acid ester include tris(2-ethylhexyl) phosphate, triethyl phosphate, diphenyl-2-ethylhexyl phosphate and tricresyl phosphate.

- An ester of citric acid, succinic acid and/or fumaric acid.

In addition, a polyester or oligoester formed from a polyhydric alcohol and a polycarboxylic acid, a terminal-esterified or etherified product of the polyester or oligoester, or a polyester or oligoester formed from a lactone or a hydroxycarboxylic acid, a tenninal-esterified or etherified product of the polyester or oligoester, and others may also be used as the plasticizer.

In a case where the resin composition constituting the resin film contains a plasticizer and a plasticized polyvinyl acetal resin film is used in combination in the production of a laminated glass, it is preferred to use the same plasticizer as that contained in the plasticized polyvinyl acetal resin film or a plasticizer that cannot deteriorate the physical properties (e.g., heat resistance, light resistance, transparency and plasticization efficiency) of the plasticized polyvinyl acetal resin film, from the viewpoint that the problem associated with the migration of the plasticizer or plasticizers between the resin film and the plasticized polyvinyl acetal resin film (e.g., the problem of the change in physical properties over time) can be more readily prevented. From this viewpoint, it is preferred to use triethylene glycol-bis-(2-ethylhexanoate), triethylene glycol-bis(2-ethylbutanoate), tetraethylene glycol-bis-(2-ethylhexanoate) or tetraethylene glycol-bisheptanoate, and it is particularly preferred to use triethylene glycol-bis-(2-ethylhexanoate) (also referred to as "3GO", hereinafter), as the plasticizer.

The resin film may further contain an additive such as an ultraviolet ray absorber, an antioxidant agent, an adhesion modifier, a whitening agent or a fluorescent whitening agent, a stabilizing agent, a coloring matter, a processing auxiliary agent, organic or inorganic nanoparticles, calcined silicate, a corrosion inhibitor, a surface activating agent and water. These additives may be used singly, or two or more of them may be used in combination.

In one embodiment, it is preferred that the resin film contains a corrosion inhibitor in order to inhibit the corrosion of the heat-generating conductive structure. The content of the corrosion inhibitor in the resin film is preferably 0.005 to 5% by mass based on the total mass of the resin composition constituting the resin film. Examples of the corrosion inhibitor include substituted or unsubstituted benzotriazole.

In the present invention, the highest temperature among the melting point and the glass transition temperature of the resin composition constituting the resin film is preferably 30°C or higher and 180°C or lower, more preferably 150°C or lower, still more preferably 130°C or lower, particularly preferably 100°C or lower, most preferably 90°C or lower, and is also preferably 35°C or higher, particularly preferably 37°C or higher. When the highest temperature among the melting point and the glass transition temperature falls within the above-mentioned range, the resin film can be more readily softened at a laminated glass production temperature and, therefore, can follow a glass or the like having a high curvature satisfactorily and more readily. In a case where the resin composition is amorphous and therefore does not exhibit a melting point, the term "the highest temperature" refers to a highest glass transition temperature. In a case where the resin composition has no glass transition temperature, the term "highest temperature" refers to a melting point. Each of the glass transition temperature and the melting point can be measured with, for example, a differential scanning calorimeter (DSC).

The thickness of the resin film is preferably 0.3 mm or less, more preferably 0.2 mm or less, most preferably 0.15 mm or less. When the thickness of the resin film is equal to or less than the above-mentioned upper limit value, in a case where a plasticized polyvinyl acetal resin film is used in combination in the production of a laminated glass, the amount of a plasticizer migrating from the plasticized polyvinyl acetal resin film to the resin film can be decreased and, therefore, the reduction in the amount of the plasticizer in the plasticized polyvinyl acetal resin film can be prevented. As a result, such a problem that the shock against a head part upon crush of a vehicle having a glass for vehicles which is produced by use of the resin film increases can be less likely to occur. The thickness of the resin film is preferably 0.01 mm or more, more preferably 0.02 mm or more, particularly preferably 0.03 mm or more. When the thickness of the resin film is equal to or more than the above-mentioned lower limit value, the problem of the distortion or the like in the heat-generating conductive structure due to the shrinkage or deformation of the resin film can be less likely to occur. The thickness of the resin film can be measured using a thickness meter, a laser microscope or the like.

<Method for producing resin film>

The method for producing the resin film is not particularly limited. For example, the resin film can be produced by blending the resin, optionally a specified amount of the plasticizer and optionally another additive, kneading them homogeneously, and then forming the resultant product into a sheet (film), which is used as the resin film, by use of a publicly known film formation method such as an extrusion method, a calendar method, a press method, a casting method and an inflation method.

Among these methods, a method in which the sheet (film) is produced by use of an extruder is preferably employed. The resin temperature employed in the extrusion may be selected appropriately depending on the type of the resin, and is, for example, 150 to 250°C, preferably 170 to 230°C. If the resin temperature is too high, the resin may be decomposed and, as a result, the content of a volatile substance may increase. On the other hand, if the temperature is too low, the content of a volatile substance may also increase. In order to remove the volatile substance efficiently, it is preferred to remove the volatile substance by reducing the pressure at a vent port of the extruder. In a case where the resin film is produced by use of an extruder, the resin film may be melt-extruded onto a metal foil, as mentioned later.

<Heat-generating conductive structure>

The composite film of the present invention has a heat-generating conductive structure which is arranged on the resin film and comprises at least a plurality of main conductive fine wires. The heat-generating conductive structure is a conductive structure for heat generation purpose, that is, for generating heat.

From the viewpoint of electrical resistance, heat-generating properties and optical properties, the main conductive fine wires may extend in a linear or non-linear shape on the resin film. From the viewpoint that disconnection can be more readily inhibited, it is preferred that the main conductive fine wires extend in a non-linear shape on the resin film, and it is also preferred that the main conductive fine wires are in a wholly or partly wavy and/or zig-zag shape. When the main conductive fine wires have this type of shape, the disconnection of the main conductive fine wires during the production of a laminated glass can be more readily inhibited. In addition, the main conductive fine wires, for example adjacent two or the main conductive fine wires, may be partly in contact with each other or may partly intersect with each other. When the main conductive fine wires have this type of shape, even if the below-mentioned auxiliary conductive fine wires are not present, the same advantage as that produced when auxiliary conductive fine wires are provided can be secured, more specifically electrical bypass routes can be secured in a case where a part of the main conductive fine wires is disconnected. As a result, the electrical reliability of a laminated glass produced by use of the composite film can be further improved. In one example of the heat-generating conductive structure, the main conductive fine wires may have a single shape, or may have a mixture of a plurality of shapes.

The composite film of the present invention has at least one electronic member attachment region which does not comprise a plurality of main conductive fine wires. The electronic member attachment region does not comprise the main conductive fine wires. Therefore, the sensitivity of an electronic member is never interfered with the main conductive fine wires and good sensitivity can be achieved. Examples of the electronic member include a camera, a sensor and an antenna. The shape of the electronic member attachment region may be selected appropriately depending on the shape of an electronic member to be attached, and may be any shape such as an approximately circular shape, an approximately elliptical shape and an approximately rectangular shape. The size of the electronic member attachment region may also be selected appropriately depending on the size of an electronic member to be attached. In a laminated glass having the composite film of the present invention, by having the above-mentioned electronic member attachment region, it is possible to achieve the heating of the whole area of the laminated glass, to secure good sensitivity of the electronic member, and to achieve the efficient heating of an area surrounding the electronic member.

In one embodiment, on the resin film, two main bus bars are arranged at opposing positions to each other, and the main bus bars are electrically connected to terminals of the plurality of main conductive fine wires. As the bus bar, a bus bar which is commonly used in the art can be used. Examples of the bus bar include a metal foil tape, a metal foil tape having a conductive adhesive agent attached thereto, and a conductive paste. The bus bar may be formed simultaneously with the formation of the heat-generating conductive structure, for example by leaving a portion of a metal foil as the bus bar in the formation of the heat-generating conductive structure by etching the metal foil. Alternatively, the bus bar may be formed by printing the bus bar with the formation of the heat-generating conductive structure by a printing method. Power feed wires are connected to the bus bars, respectively. An electric current is fed to the heat-generating conductive structure upon the connection of each of the power feed wires to a power supply.

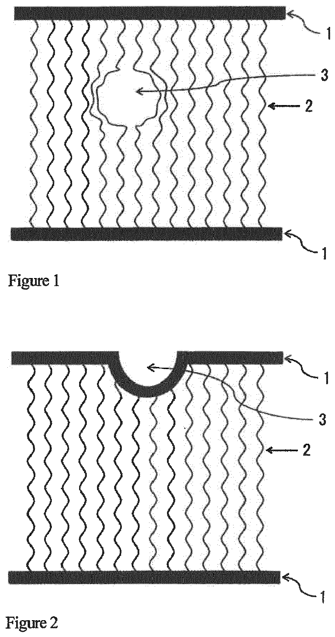

In one embodiment, at least one of the electronic member attachment regions is present in a region between the two main bus bars. One example of the configuration of the heat-generating conductive structure and the main bus bars in the composite film of this embodiment is shown in Fig. 1. The position at which the electronic member attachment region is present is only required to be a position in the region between the two main bus bars, and can be selected appropriately depending on the position at which an electronic member is to be arranged.

In another embodiment, at least one of the electronic member attachment regions is present in an area other than the area between the two main bus bars. One example of the configuration of the heat-generating conductive structure and the main bus bars in the composite film of this embodiment is shown in Fig. 2. The position at which the electronic member attachment region is present is only required to be a position outside the region between the two main bus bars, and can be selected appropriately depending on the position at which an electronic member is to be arranged.

In one embodiment, the heat-generating conductive structure further comprises auxiliary conductive fine wires that electrically connect the adjacent two of the main conductive fine wires to each other, wherein two or more of approximately rectangular or trapezoidal regions, each formed by two sides composed of adjacent two of the main conductive fine wires and two sides composed of adjacent two of the auxiliary conductive fine wires which are present between the two sides composed of adjacent two of the main conductive fine wires, have different shapes from each other. Since the heat-generating conductive structure further comprises the auxiliary conductive fine wires, electrical bypass routes can be secured in a case where a part of the main conductive fine wires is disconnected. Therefore, the electrical reliability of a laminated glass produced by use of the composite film can be further improved. Furthermore, since two or more of approximately rectangular or trapezoidal regions, each formed by two sides composed of adjacent two of the main conductive fine wires and two sides composed of adjacent two of the auxiliary conductive fine wires which are present between the two sides composed of adjacent two of the main conductive fine wires, have different shapes from each other, the wiring pattern of the heat-generating conductive structure is macroscopically irregular, in other words, is not a regular wiring pattern such as a grid-like or mesh-like shape. As a result, optical strain or the like can be reduced and good front visibility can be more readily achieved.

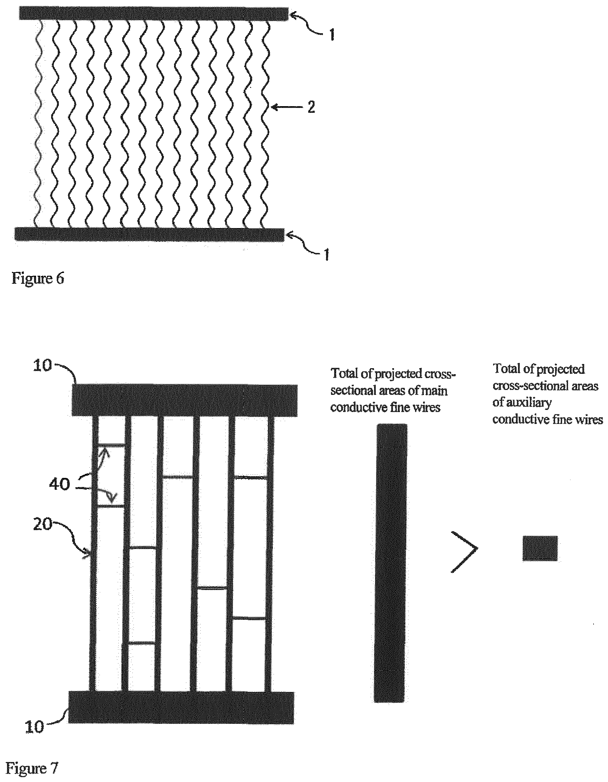

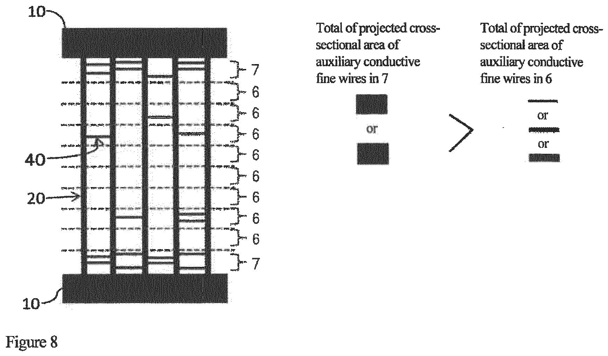

For the purpose of explaining the relationship between the projected cross-sectional areas of the main conductive fine wires and the projected cross-sectional areas of the auxiliary conductive fine wires, examples of the projected cross-sectional area of the heat-generating conductive structure in the composite film of the present invention which is projected from the surface of the composite film are shown in Figs. 7 and 8. For the sake of simplicity of the drawings, the electronic member attachment region is not shown in these drawings.

For example, Fig. 7 shows one example of the projected cross-sectional area of the heat-generating conductive structure in the composite film of the present invention, which is projected from the surface of the composite film. In the projected cross-sectional area of the heat-generating conductive structure, which is projected from the surface of the composite film, shown in Fig. 7, the total of the projected cross-sectional areas 40 of the auxiliary conductive fine wires is preferably less than 1 time the total of the projected cross-sectional areas 20 of the main conductive fine wires. This means that the proportion of the projected cross-sectional areas of the auxiliary conductive fine wires is smaller than that of the main conductive fine wires. It is more preferred that the total of the projected cross-sectional areas 40 of the auxiliary conductive fine wires is less than 0.7 time, more preferably less than 0.5 time, the total of the projected cross-sectional areas 20 of the main conductive fine wires. When the total of the projected cross-sectional areas 40 of the auxiliary conductive fine wires is less than the above-mentioned upper limit value, a haze value can be more readily reduced and the front visibility can be more readily improved. The total of the projected cross-sectional areas 40 of the auxiliary conductive fine wires is preferably 0.1 time or more, more preferably 0.3 time or more, the total of the projected cross-sectional areas 20 of the main conductive fine wires. When the total of the projected cross-sectional areas 40 of the auxiliary conductive fine wires is equal to or more than the above-mentioned lower limit value, the disconnection can be effectively and more readily inhibited and the heat-generating properties can be more readily improved.

In Fig. 8, one example of the projected cross-sectional area of the heat-generating conductive structure in the composite film of the present invention, which is projected from the surface of the composite film, is shown. In the projected cross-sectional area of the heat-generating conductive structure shown in Fig. 8 which is projected from the surface of the composite film, when the area between the two main bus bars is divided into ten regions so that the length of each of the main conductive fine wires is divided into ten equal parts, it is preferred that the total of the projected cross-sectional areas of the auxiliary conductive fine wires in each of two regions 7 contacting with the main bus bars is larger than that in each of the remaining eight regions 6. This means that the number of the auxiliary conductive fine wires is larger in regions near the bus bars. Therefore, by arranging the auxiliary conductive fine wires in this manner, the disconnection in regions near the bus bars where the disconnection may be likely to occur can be effectively inhibited. It is more preferred that the total of the projected cross-sectional areas of the auxiliary conductive fine wires in each of regions 7 contacting with the two main bus bars is 1.5 times or more, more preferably 2 times or more, still more preferably 3 times or more, the total of the projected cross-sectional areas of the auxiliary conductive fine wires in each of the remaining eight regions 6.

From the viewpoint of electrical resistance and easiness of production, the thickness of the heat-generating conductive structure is preferably 1 to 30 $\mu$m, more preferably 2 to 15 $\mu$m, particularly preferably 3 to 12 $\mu$m. The thickness of the heat-generating conductive structure can be measured using a thickness meter, a laser microscope or the like.

From the viewpoint of securing both of a sufficient amount of heat generation and good front visibility more readily, it is preferred that the heat-generating conductive structure is composed of a plurality of main conductive fine wires and optionally auxiliary conductive fine wires, each having a line width of 1 to 30 $\mu$m. The line width is more preferably 2 to 14 $\mu$m, particularly preferably 3 to 12 $\mu$m. If the line width falls within the above-mentioned range, when a laminated glass produced by use of the composite film is used, both of the heating of the whole area of the laminated glass and the efficient heating of a region surrounding the electronic member can be achieved, and the view of a driver cannot be hindered, the necessity of application of a black paint can be eliminated, and the flexibility of positioning (design performance) of the electronic member can be improved. The line width can be measured using a laser microscope or the like.

In the region between the two main bus bars, it is preferred that the average space interval between the adjacent main conductive fine wires comprised in a region within 2 cm from the periphery of the electronic member attachment region which are present in the region between the two main bus bars is smaller than the average space interval between the adjacent main conductive fine wires comprised in the whole area of the composite film. When a laminated glass is produced by use of the composite film of this type, it is more readily possible to achieve the heating of the whole area of a region in which the composite film is present and the further efficient heating of the periphery of the electronic member in the laminated glass. From the viewpoint of securing both of a sufficient amount of heat generation and good front visibility more readily, the average space interval between the main conductive fine wires comprised in the whole area of the composite film is generally 0.1 mm or more and 5 mm or less, preferably 0.5 mm or more and 4 mm or less. Examples of the method for measuring the average space interval between the adjacent main conductive fine wires include a method in which intersection points, where a straight line passing through the center of the electronic member attachment region and being parallel to the main bus bars and the main conductive fine wires intersect, are determined, then the distances between the intersection points are defined as the distances between the main conductive fine wires passing through the intersection points, and then the distances are arithmetically averaged to determine the average space interval.

In one preferred embodiment, the average space interval between the adjacent main conductive fine wires comprised in a region within 2 cm from the periphery of the electronic member attachment region present in the region between the two main bus bars is preferably 0.1 mm or more and to 5 mm or less, more preferably 0.3 mm or more and 3 mm or less. When the average space interval falls within the above-mentioned range, it is more readily possible to achieve the further efficient heating of the periphery of the electronic member.

In one embodiment, a portion of the main bus bar is curved so as to surround 1/4 or more of the periphery of the electronic member attachment region. In Fig. 2, the schematic illustration showing one example of the configuration of the heat-generating conductive structure and the main bus bars in the composite film of this embodiment is shown. Since a portion of the main bus bar is curved as mentioned above, an electronic member can be attached near the main bus bars and therefore a laminated glass having high design flexibility can be more readily produced.

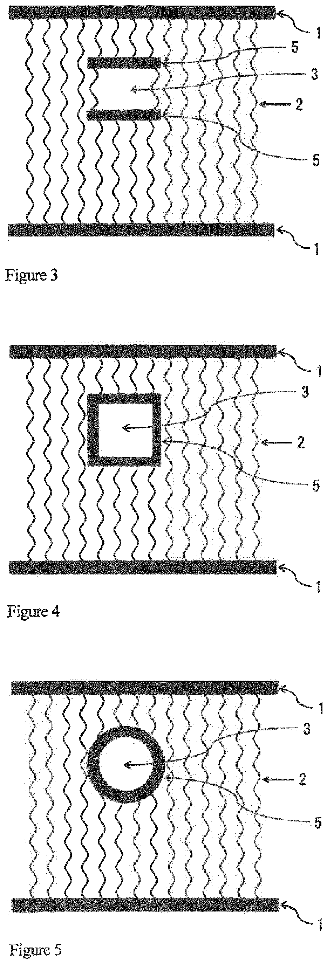

In one embodiment, at least one auxiliary bus bar is further arranged on the resin film so as to surround 1/4 or more of the periphery of the electronic member attachment region present in the region between the two main bus bars, and the at least one auxiliary bus bar is electrically connected to the two main bus bars through the main conductive fine wires. In each of Figs. 3 to 5, one example of the configuration of the heat-generating conductive structure, the main bus bars and the auxiliary bus bar in the composite film of this embodiment is shown. With respect to the shape of the auxiliary bus bar(s), two auxiliary bus bars may be arranged at opposing positions to each other as shown in Fig. 3, or a single auxiliary bus bar may surround a rectangular or circular electronic member attachment region as shown in Fig. 4 or 5, for example. In the embodiment in which two auxiliary bus bars are arranged at opposing positions to each other, it is possible to electrically connect the auxiliary bus bars to each other through the main conductive fine wires as long as the main conductive fine wires are not comprised in the electronic member attachment region, as shown in Fig. 3. The position(s) at which the auxiliary bus bar(s) is arranged is only required to be located in the region between the two main bus bars, and can be selected appropriately depending on the position at which an electronic member is to be arranged. Since the auxiliary bus bar(s) is/are further arranged as mentioned above, the lengths of the main conductive fine wires can be shortened and a laminated glass with reduced frequency of disconnection can be more readily produced. It is critical for the auxiliary bus bar(s) to be electrically connected to the main bus bars in such a manner that the resistance value between the main bus bars cannot change and to never undergo disconnection. The line width of the auxiliary bus bar is preferably 0.05 to 100 mm, more preferably 0.2 to 50 mm, and is particularly preferably 0.2 to 30 mm from the viewpoint that the vision of a diver can be less likely to be hindered and others. The line width of the auxiliary bus bar can be measured using a laser microscope or the like.

The conductive material forming the heat-generating conductive structure is preferably silver, copper or tungsten from the viewpoint of the easiness to secure electrical resistance or heat generation amount and the viewpoint of easiness of production, and is more preferably copper from the viewpoint of economic benefit.

In a case where the heat-generating conductive structure is a metal foil etching structure, i.e., a structure produced by etching a metal foil, it is preferred that one surface or both surfaces, and more preferably side surfaces, of the heat-generating conductive structure is/are low-reflectance-treated. For example, an embodiment can be mentioned, in which at least an resin film-contacting surface among the surfaces of the heat-generating conductive structure is low-reflectance-treated. In a case where an adhesive agent layer is provided between the resin film and the heat-generating conductive structure, an embodiment can be mentioned, in which at least an adhesive agent layer-contacting surface among the surfaces of the heat-generating conductive structure is low-reflectance-treated.

The wording "(a surface) is low-reflectance-treated" as used herein refers to the matter that the surface is treated so as to have a visible light reflectance of 30% or less as measured in accordance with JIS R 3106. From the viewpoint of front visibility, it is more preferred that the surface(s) is treated so as to have a visible light reflectance of 10% or less. When the visible light reflectance is equal to or lower than the upper limit value, in a case where a composite film having the heat-generating conductive structure is used in a glass for vehicles, front visibility can be superior, for example, the glare due to head lights of an oncoming vehicle can be inhibited.

Examples of the low-reflectance treatment include a blacking treatment (a darkish finish treatment), a brownish finish treatment, and a plating treatment From the viewpoint of process passability, the low-reflectance treatment is preferably a blacking treatment.

The method for the blacking treatment is not particularly limited, and examples of the method include a method in which an alkaline blacking solution is used and a method in which an oxidation treatment is carried out.

In a case where the heat-generating conductive structure has a plurality of surfaces, it is preferred that at least one of the surfaces is low-reflectance-treated. Furthermore, it is preferred that 1/10 or more, more preferably 2/10 or more, of the areas of the plurality of surfaces is low-reflectance-treated.

[Method for producing composite film]

The composite film can be produced by, for example, providing the heat-generating conductive structure onto the resin film. Examples of the method for providing the heat-generating conductive structure onto the resin film include a method in which a material constituting the heat-generating conductive structure is coated, printed or laminated onto one surface of the resin film.

Examples of the method for coating the material include: a method in which a melt of a resin composition constituting the resin film is coated onto the heat-generating conductive structure (e.g., a method in which the resin composition is melt-extruded onto the heat-generating conductive structure, or a method in which the resin composition is applied onto the heat-generating conductive structure with a knife or the like); and a method in which the heat-generating conductive structure is provided onto the resin film by means of deposition, sputtering or electrodeposition.

Examples of the method for printing the material include a screen printing method, a flexographic printing method and a gravure printing method. In the method for printing, an ink which can be dried or can be cured with heat or light is used before the lamination of the resin film having the heat-generating conductive structure attached thereto on a glass or the like.

Examples of the method for laminating the material include: a method in which the heat-generating conductive structure and the resin film are overlaid on each other and then the resultant product is thermally press bonded; a method in which a solvent or a solution of a resin composition which contains a resin constituting the resin film and a solvent is applied onto one or both of the heat-generating conductive structure and the resin, or is injected between the heat-generating conductive structure and the resin film, thereby laminating the heat-generating conductive structure and the resin film on each other, and a method in which the heat-generating conductive structure and the resin film are laminated on each other with an adhesive agent.

In a case where the heat-generating conductive structure and the resin film are laminated on each other with an adhesive agent, the used adhesive agent is preferably one which can be less likely to inhibit the transparency of the resultant composite film, such as a polyvinyl acetal resin having a low polymerization degree, an acrylate-based adhesive agent, an isocyanate resin and a urethane resin. In this regard, from the viewpoint of avoiding the formation of haze derived from the adhesive agent for bonding the heat-generating conductive structure, it is preferred that the composite film of the present invention does not have an adhesive agent layer between the resin film and the heat-generating conductive structure. In this case, excellent transparency can be more readily achieved in the composite film and the laminated glass produced by use of the composite film of the present invention.

The ink used in the printing method contains conductive particles and/or conductive fibers. Examples of the conductive particles or the conductive fibers include: metal particles (e.g., particles of gold, silver, copper, zinc, iron, tungsten or aluminum); particles or fibers coated with a metal (e.g., glass fibers or glass microspheres each plated with silver); and particles or fibers of conductive carbon black, carbon nanotubes, graphite or graphene. The conductive particles may be semiconductor particles such as conductive metal oxide particles, such as particles of indium-doped tin oxide, indium-doped zinc oxide or antimony-doped tin oxide. The ink preferably contains silver particles, tungsten particles, copper particles and/or carbon nanotubes, more preferably silver particles, tungsten particles or copper particles from the viewpoint of electronic conductivity, and particularly preferably contains copper particles, from the viewpoint of economic benefit.

From the viewpoint that the production efficiency in the provision of the heat-generating conductive structure can be improved and the viewpoint that the treatment can be more readily carried out, it is preferred that the heat-generating conductive structure is a metal foil etching structure, i.e., a structure produced by etching a metal foil. The method for laminating the metal foil and the resin film on each other can be carried out by, for example, any one of the following methods (I) to (III).

(I) A method in which the resin film and the metal foil are thermal press bonded to each other while overlaying the resin film and the metal foil on each other;
(II) a method in which a molten product of a resin composition constituting the resin film is coated on the metal foil, for example, a method in which the resin composition is melt-extruded onto the metal foil, or a method in which the resin composition is applied onto the metal foil with a knife or the like; or

(III) a method in which a solvent or a solution or dispersion of a resin composition containing a resin constituting the resin film and a solvent is applied onto one or both of the metal foil and the resin film or is injected between the metal foil and the resin film to laminate the metal foil and the resin film on each other.

From the viewpoint that good front visibility can be more readily achieved when a laminated glass is produced, it is preferred to use a metal foil of which one surface or both surfaces is/are blacking-treated. The blacking treatment of the metal foil can be carried out by use of an alkaline blacking solution or the like, as mentioned above.

The metal foil and the resin film may be laminated on each other with an adhesive agent. As mentioned above, the used adhesive agent is preferably one which never inhibits the transparency of the resultant composite film. As mentioned above, it is preferred that the metal foil and the resin film are laminated on each other without the use of an adhesive agent, from the viewpoint of avoiding the haze derived from an adhesive agent.

The thermal press bonding temperature employed in the thermal press bonding between the metal foil and the resin film in the method (I) is determined depending on the type of the resin constituting the resin film, and is generally 90 to 200°C, preferably 100 to 190°C, more preferably 110 to 185°C, still more preferably 110 to 180°C. When the thermal press bonding temperature falls within the above-mentioned range, good bonding strength can be more readily achieved.

The resin temperature employed in the extrusion in method (II) is preferably 150 to 250°C, more preferably 170 to 230°C, from the viewpoint of reducing the content of a volatile substance in the resin film. In order to remove the volatile substance efficiently, it is preferred to remove the volatile substance by reducing the pressure at a vent port of the extruder.

As the solvent used in the method (III), it is preferred to use a plasticizer that is commonly used for a polyvinyl acetal resin. As the plasticizer, the plasticizer mentioned above in the section "Resin film" can be used.

The step of forming a desired shape of the heat-generating conductive structure from the resin film with metal foil can be carried out by employing a publicly known photolithographic technique. As a result, the composite film of the present invention can be produced. The step is carried out by, for example, laminating a dry film resist onto the metal foil in the resin film with metal foil, then forming an etching-resistant pattern by employing a photolithographic technique, then immersing the resin film having the etching-resistant pattern formed thereon in a copper etching solution to form the shape of the heat-generating conductive structure, and then removing the remaining photoresist layer by a publicly-known method, as mentioned below in the section "EXAMPLES". In this step, it is also possible to form the main bus bars or to form the main bus bars and the auxiliary bus bars simultaneously.

From the viewpoint of the easiness to secure electrical resistance or heat generation amount and the viewpoint the easiness of production, it is preferred that the metal foil contains silver, copper or tungsten. It is more preferred that the metal foil contains copper or tungsten, from the viewpoint of economic benefit. In a particularly preferred embodiment, the metal foil is a copper foil or a tungsten foil.

In a case where a method of coating, printing or laminating a material constituting the heat-generating conductive structure is employed as the method for forming the heat-generating conductive structure, the thickness of each of connecting parts between the main conductive fine wires and the main bus bars is preferably smaller than the total of the thickness of each of the main conductive fine wires and the thickness of each of the main bus bars, is more preferably 0.9 time or less the above-mentioned total, still more preferably 0.8 time or less the above-mentioned total, particularly preferably 0.7 time or less the above-mentioned total. It is most preferred that the thickness of each of the connecting parts between the main conductive fine wires and each of the main bus bars is the same as the thickness of each of the main conductive fine wires and the thickness of each of the main bus bars. When the thickness of each of the connecting parts between the main conductive fine wires and the main bus bars is equal to or less than the above-mentioned upper limit value or is the same as the thickness of each of the main conductive fine wires and the thickness of each of the main bus bars, the entrapping of air bubbles can be more readily inhibited during the production of a laminated glass having the resultant composite film.

The thickness of the composite film is preferably 10 μm or more, more preferably 20 μm or more, still more preferably 30 μm or more. When the thickness of the composite film is equal to or more than the above-mentioned value, the problem that distortion or the like is generated in the heat-generating conductive structure due to the shrinkage or deformation of the composite film can be less likely to occur. The thickness of the composite film is preferably 300 μm or less, more preferably 250 μm or less, particularly preferably 200 μm or less. When the thickness of the composite film is equal to or less than the above-mentioned value, in a case where a plasticized polyvinyl acetal resin film is used in combination in the production of a laminated glass, the amount of a plasticizer migrating from the plasticized polyvinyl acetal resin film to the resin film is decreased and, therefore, the reduction in the amount of the plasticizer in the plasticized polyvinyl acetal resin film can be prevented. As a result, such a problem that the shock against a head part upon crush of a vehicle having a glass for vehicles which is produced by use of the resin film increases can be less likely to occur. The thickness of the composite film can be measured using a thickness meter, a laser microscope or the like.

[Laminated glass]

The present invention also relates to a laminated glass having the composite film arranged between at least two glasses.

The glass is preferably an inorganic glass (also simply referred to as a "glass", hereinafter), and an organic glass such as a methacrylate resin sheet, a polycarbonate resin sheet, a polystyrene-based resin sheet, a polyester-based resin sheet and a polycycloolefin-based resin sheet, or the like, more preferably an inorganic glass, a methacrylate resin sheet or a polycarbonate resin sheet, particularly preferably an inorganic glass, from the viewpoint of transparency, weather resistance and mechanical strength. Examples of the inorganic glass include a float glass, a strengthened glass, a semi-strengthened glass, a chemically strengthened glass, a green glass and a silica glass.

In the laminated glass, the heat-generating conductive structure in the composite film may be in contact with the glass, or may be in contact with the plasticized polyvinyl acetal resin film or another functional layer which is mentioned below.

When the heat-generating conductive structure in the composite film is in contact with the glass directly, the sealing of the bus bars and/or the heat-generating conductive structure may be insufficient and, therefore, water may invade to cause the corrosion of the bus bars and/or the heat-generating conductive structure, or air may remain during the production of the laminated glass to cause the detachment between the composite film and the glass. Therefore, it is preferred that the heat-generating conductive structure in the composite film is not in contact with the glass directly.

Particularly in a case where the composite film of the present invention is used in a front glass for vehicles, it is preferred to arrange the composite film in such a manner that a low-reflectance-treated surface of the heat-generating conductive structure is arranged on the driver side, from the viewpoint of front visibility.

Furthermore, since there is a possibility that water may invade from an edge of the laminated glass to cause the corrosion of the heat-generating conductive structure, it is preferred to arrange the heat-generating conductive structure inside by 1 cm or more from the edge of the laminated glass.

The laminated glass of the present invention may further comprise a plasticized polyvinyl acetal resin film, in addition to the composite film, between at least two glasses. The plasticized polyvinyl acetal resin film comprises a polyvinyl acetal resin and a plasticizer.

As the polyvinyl acetal resin contained in the plasticized polyvinyl acetal resin film, the same polyvinyl acetal resins as those mentioned above in the section "Resin film" can be used singly, or two or more of them can be used in combination. The ranges of the acetalization degree, the acetyl group amount, the hydroxyl group amount, the viscosity average polymerization degree, the molecular weight distribution and others are also the same as those mentioned in that section. When the acetalization degree of the polyvinyl acetal resin contained in the plasticized polyvinyl acetal resin film falls within the specified range, mechanical strength can be sufficient, and the penetration resistance of a laminated glass produced can be superior. Furthermore, a resin film of which the compatibility with a plasticizer can be less likely to be deteriorated can be more readily produced. When the acetyl group amount falls within the specified range, a plasticized polyvinyl acetal resin film having good bondability to the resin film, reduced optical strain or the like can be more readily produced. When the hydroxyl group amount falls within the specified range, a laminated glass having excellent penetration resistance, bondability or sound insulation properties can be more readily produced. When the viscosity average polymerization degree falls within the specified range, good film formability can be more readily achieved, and the phenomenon that glasses are misaligned due to heat in the resultant laminated glass can be more readily prevented. When the molecular weight distribution falls within the specified range, both of film formability and preferred film physical properties (e.g., laminating suitability, creep resistance, breaking strength) can be simultaneously and more readily achieved.

The polyvinyl acetal resin contained in the plasticized polyvinyl acetal resin film can be produced, for example, by the same method as the polyvinyl acetal resin production method mentioned above in the section "Resin film".

From the viewpoint that good film formability and laminating suitability can be more readily achieved and the viewpoint of more readily reducing the shock against a head part upon crush in a glass for vehicles which comprises the plasticized polyvinyl acetal resin film, it is preferred that the plasticized polyvinyl acetal resin film contains an uncrosslinked polyvinyl acetal resin. The plasticized polyvinyl acetal resin film may contain a crosslinked polyvinyl acetal resin. The method for crosslinking the polyvinyl acetal resin is the same as the method mentioned above in the section "Resin film".

The amount of the plasticizer contained in the plasticized polyvinyl acetal resin film is preferably 16.0% by mass or more, more preferably 16.1 to 36.0% by mass, still more preferably 22.0 to 32.0% by mass, particularly preferably 26.0 to 30.0% by mass, based on the total mass of a resin composition constituting the plasticized polyvinyl acetal resin film in an initial state before film lamination. When the content of the plasticizer falls within the above-mentioned range, in a case where the plasticized polyvinyl acetal resin film is used in combination in the production of a laminated glass, a laminated glass having excellent impact resistance can be more readily produced. As the plasticized polyvinyl acetal resin film, a plasticized polyvinyl acetal resin film having a sound insulating function can also be used. In this case, the content of the plasticizer is preferably 30% by mass or more, more preferably 30 to 50% by mass, still more preferably 34 to 45% by mass, particularly preferably 38 to 43% by mass, based on the total mass of a resin composition constituting the plasticized polyvinyl acetal resin film having a sound-insulating function in an initial state before film lamination.

As the plasticizer, the plasticizer mentioned above in the section "Resin film" can be used.

In the plasticized polyvinyl acetal resin film, the additive mentioned above in the section "Resin film" may be used as required.

The thickness of the plasticized polyvinyl acetal resin film is preferably 0.2 to 5.0 mm, more preferably 0.3 to 4.0 mm, particularly preferably 0.35 to 3.0 mm, from the viewpoint of producing a laminated glass having excellent impact resistance more readily. The thickness of the plasticized polyvinyl acetal resin film can be measured using a thickness meter, a laser microscope or the like.

The laminated glass of the present invention may further comprise another functional layer, in addition to the composite film or in addition to the composite film and the plasticized polyvinyl acetal resin film, between at least two glasses. Examples of the another functional layer include an infrared ray reflecting layer, an ultraviolet ray reflecting layer, a color correcting layer, an infrared ray absorbing layer, an ultraviolet ray absorbing layer, a visible light reflecting layer, a fluorescence or light emitting layer, a sound insulating layer, an electrochromic layer, a thermochromic layer, a photochromic layer, a decorative layer, and a high-elastic-modulus layer. The another functional layer may be a composite layer having a combination of two or more functions.

Examples of the configuration of the laminated glass of the present invention are as follows. The position of the another functional layer may be any one of positions (2), (3) and (7) to (17), or the another functional layers may be arranged at two or more positions among the above-mentioned positions. The another functional layer may be a composite layer further comprising an adhesive layer.

(1) A (glass A)/(composite film (resin film/heat-generating conductive structure))/(glass B) three-layer configuration;

(2) a (glass A)/(composite film (resin film/heat-generating conductive structure))/(another functional layer)/(glass B) four-layer configuration;

(3) a (glass A)/(another functional layer)/(composite film (resin film/heat-generating conductive structure))/(glass B) four-layer configuration;

(4) a (glass A)/(composite film (resin film/heat-generating conductive stmcture))/(plasticized polyvinyl acetal resin film)/(glass B) four-layer configuration;

(5) a (glass A)/(plasticized polyvinyl acetal resin film)/(composite film (resin film/heat-generating conductive structure))/(glass B) four-layer configuration;

(6) a (glass A)/(plasticized polyvinyl acetal resin film)/(composite film (resin film/heat-generating conductive structure))/(plasticized polyvinyl acetal resin film)/(glass B) five-layer configuration;

(7) a (glass A)/(another functional layer)/(composite film (resin film/heat-generating conductive structure))/(plasticized polyvinyl acetal resin film)/(glass B) five-layer configuration;

(8) a (glass A)/(composite film (resin film/heat-generating conductive structure))/(another functional layer)/(plasticized polyvinyl acetal resin film)/(glass B) five-layer configuration;

(9) a (glass A)/(composite film (resin film/heat-generating conductive structure))/(plasticized polyvinyl acetal resin film)/(another functional layer)/(glass B) five-layer configuration;

(10) a (glass A)/(another functional layer)/(plasticized polyvinyl acetal resin film)/(composite film (resin film/heat-generating conductive structure))/(glass B) five-layer configuration;

(11) a (glass A)/(plasticized polyvinyl acetal resin film)/(another functional layer)/(composite film (resin film/heat-generating conductive structure))/(glass B) five-layer configuration;

(12) a (glass A)/(plasticized polyvinyl acetal resin film)/(composite film (resin film/heat-generating conductive structure))/(another functional layer)/(glass B) five-layer configuration;

(13) a (glass A)/(another functional layer)/(plasticized polyvinyl acetal resin film)/(composite film (resin film/heat-generating conductive structure))/(plasticized polyvinyl acetal resin film)/(glass B) six-layer configuration;

(14) a (glass A)/(plasticized polyvinyl acetal resin film)/(another functional layer)/(composite film (resin film/heat-generating conductive structure))/(plasticized polyvinyl acetal resin film)/(glass B) six-layer configuration;

(15) a (glass A)/(plasticized polyvinyl acetal resin film)/(composite film (resin film/heat-generating conductive structure))/(another functional layer)/(plasticized polyvinyl acetal resin film)/(glass B) six-layer configuration;

(16) a (glass A)/(plasticized polyvinyl acetal resin film)/(composite film (resin film/heat-generating conductive structure))/(plasticized polyvinyl acetal resin film)/(another functional layer)/(glass B) six-layer configuration; and

(17) a (glass A)/(composite film (resin film/heat-generating conductive structure))/(plasticized polyvinyl acetal resin film)/(another functional layer)/(plasticized polyvinyl acetal resin film)/(glass B) six-layer configuration;

[Method for producing laminated glass]

The laminated glass can be produced by a method known by a person skilled in the art For example, a laminated glass can be produced by placing the composite film and optionally an arbitrary number of plasticized polyvinyl acetal resin film(s) arranged in an arbitrary order on a glass, then overlaying another glass on the resultant product, then increasing the temperature to wholly or partly fuse the composite film and optionally the plasticized polyvinyl acetal resin film(s) to the glasses as a preliminary press bonding step, and then treating the fused product in an autoclave.

Alternatively, a laminated glass may be produced by arranging the composite film, which is optionally bonded to the plasticized polyvinyl acetal resin film(s) and/or the another functional layer(s) together in advance, between two glasses, and then fusing the resultant product together at a high temperature.

Examples of the method for achieving the preliminary press bonding step include: a method in which deaeration is carried out under reduced pressure with a vacuum bag, a vacuum ring, a vacuum laminator or the like; a method in which deaeration is carried out with a nip roll; and a method in which compression molding is carried out under a high temperature, from the viewpoint of removing excessive air or performing slight bonding of adjacent layers to each other. For example, the vacuum bag method or the vacuum ring method described in EP 1235683 B1 can be carried out at about $2 \times 10^4$ Pa and at 130 to 145°C. A vacuum laminator is composed of a chamber that can be heated and can be vacuated, and the laminated glass can be produced in the chamber within a range of about 20 to about 60 minutes. In general, it is effective to employ a reduced pressure of 1 Pa to $3 \times 10^4$ Pa and a temperature of 100°C to 200°C, particularly 130°C to 160°C. In a case where a vacuum laminator is used, the treatment with an autoclave may not be carried out depending on the employed temperature or pressure. The treatment with an autoclave can be carried out, for example, at a pressure of about $1 \times 10^6$ Pa to about $1.5 \times 10^6$ Pa and a temperature of about 100°C to about 145°C for about 20 minutes to about 2 hours.

Finally, the composite film may be subjected to an autoclave process, as required.

The method for placing the composite film and optionally an arbitrary number of plasticized polyvinyl acetal resin film(s) arranged in an arbitrary order on a first glass and then further overlaying a second glass on the resultant product is not particularly limited. For example, it is possible to feed the composite film and optionally the plasticized polyvinyl acetal resin film(s) through rolls having widths corresponding to the composite film and optionally the plasticized polyvinyl acetal resin film(s) respectively, then cut the fed product(s) into a desired size, and then arrange the cut product(s), or it is possible to arrange the film(s) which is/are cut in advance in a desired size. In a case where the laminated glass is an automotive front glass, it is possible to use a product or products produced by heating, drawing and cutting the plasticized polyvinyl acetal resin film(s) fed through the roll to process the product(s) into a fan-like shape.

In the field of automobiles, particularly in the production of a front glass, a so-called "color shading region" is sometimes provided on an upper part of a glass. The color shading region can be produced by extruding the composite film and/or optionally laminated plasticized polyvinyl acetal resin film(s) together with an appropriately colored polymer melt. In this case, at least one of the composite film and the plasticized polyvinyl acetal resin film(s) may be wholly or partly colored, or may have a partly differently colored portion.

In the plasticized polyvinyl acetal resin film used in the present invention, color gradation adapted to the shape of a front glass may be provided in a previous step.

The plasticized polyvinyl acetal resin film may have a wedge-shaped thickness profile. In this case, even when the thickness profile of the composite film is a plane parallel shape, the laminated glass of the present invention can have a wedge-shaped thickness profile. Therefore, the formation of a double image that may occur when used in a head-up display (HUD) in an automotive front glass can be prevented.

For the purpose of blocking infrared ray, nano-particles having an infrared ray absorption ability or an infrared ray reflection ability may be dispersed in the plasticized polyvinyl acetal resin film, or a colored plasticized polyvinyl acetal resin film may be used. The plasticized polyvinyl acetal resin film may have two or more of the above-mentioned plurality of functions.

In the laminated glass of the present invention, an electronic member can be attached to the electronic member attachment region. Examples of the electronic member include a camera, a sensor and an antenna. The laminated glass of the present invention can be used as a laminated glass in a building or a vehicle (e.g., a train, an automobile, a ship or an aircraft), such as a front glass, a window shield grass, a rear glass, a roof glass or a side grass, particularly preferably a front glass or a window shield, for a vehicle (particularly an automobile).

When a laminated glass produced by use of the composite film of the present invention is irradiated with light from the side of a low-reflectance-treated surface (e.g., a blacking-treated surface) thereof, the haze value is generally 2.6 or less, preferably 2.2 or less, more preferably 1.9 or less, still more preferably 1.4 or less. When a laminated glass produced by use of the composite film of the present invention is irradiated with light from the side of a metallic glossy surface (i.e., a surface that is not low-reflectance-treated) thereof, the haze value is generally 3.0 or less, preferably 2.8 or less, more preferably 2.5 or less. When the haze value falls within the above-mentioned range, good sensitivity of the electronic member and good front visibility can be more readily achieved.

The haze value can be measured, for example, in accordance with JIS R 3106. The haze value can be adjusted to a value equal to or less than the above-mentioned upper limit value by using a composite film of the present invention in which no adhesive agent layer is provided between the resin film and the heat-generating conductive structure or by reducing the line width of the heat-generating conductive structure.

In the laminated glass produced by use of the composite film of the present invention, it is preferred that the wiring of the heat-generating conductive structure cannot be recognized visually from the side of a low-reflectance-treated surface of the laminated glass when observed from the position of a driver or an observer. When the wiring is not recognized visibly, the laminated glass of the present invention can be used suitably particularly in use applications for which good front visibility is required, such as a front glass for vehicles. The wiring of the heat-generating conductive structure can be less likely to be recognized visually by reducing the line width of the heat-generating conductive structure or forming the wiring patter of the heat-generating conductive structure in an irregular pattern rather than a regular pattern such as a grid-like or mesh-like pattern. The visibility of the heat-generating conductive structure can be evaluated sensorily.

In a case where a laminated glass is produced by use of a plasticized polyvinyl acetal resin film, glasses and the composite film of the present invention which is smaller in size than the plasticized polyvinyl acetal resin film and the glasses, it is preferred that the edge of the composite film cannot be recognized with naked eyes. When the edge of the composite film cannot be recognized with naked eyes, the laminated glass of the present invention can be used suitably particularly in use applications for which good front visibility is required, such as a front glass for vehicles. When a resin that is the same type as the polyvinyl acetal resin having the specified hydroxyl group amount and contained in the plasticized polyvinyl acetal resin film is used as the resin contained in the resin film of the composite film, the difference in refractive index between the resin film and the plasticized polyvinyl acetal resin film can be reduced and the edge part of the composite film can be less likely to be recognized visibly. The visibility of the edge of the composite film can be evaluated sensorily.

In the laminated glass of the present invention, in a case where the plasticized polyvinyl acetal resin film is used in combination and a polyvinyl acetal resin film is used as the resin film in the composite film, generally, the plasticizer contained in the plasticized polyvinyl acetal resin film migrates to the polyvinyl acetal resin film in the composite film with time, and the amount of the plasticizer contained in the plasticized polyvinyl acetal resin film and the amount of the plasticizer contained in the polyvinyl acetal resin film of the composite film become almost the same (average plasticizer amount) with each other. In the present invention, the average plasticizer amount is preferably 18 to 35% by mass, more preferably 20 to 30% by mass, particularly preferably 23 to 28% by mass. When the average plasticizer amount falls within the above-mentioned range, desired properties of the laminated glass, such as a property that shock against the head part of an occupant upon crash can be reduced, can be more readily achieved. The average amount of the plasticizer can be calculated after the migration of the plasticizer in accordance with the following formula.

[Mathematical Formula 1]

$$\text{Average amount of plasticizer (\% by mass)} = (A \times a + B \times b)/(a + b)$$

A (% by mass): the amount of a plasticizer in a polyvinyl acetal resin film of a composite film.
a (mm): the thickness of the polyvinyl acetal resin film in the composite film.
B (% by mass): the amount of a plasticizer in a plasticized polyvinyl acetal resin film.
b (mm): the thickness of the plasticized polyvinyl acetal resin film.

The average plasticizer amount can be adjusted to a value falling within the above-mentioned range by adjusting the amount of the plasticizer contained in the plasticized polyvinyl acetal resin film during the formation of the film, the thickness of the plasticized polyvinyl acetal resin film, the amount of the plasticizer contained in the polyvinyl acetal resin film of the composite film, or the thickness of the polyvinyl acetal resin film in the composite film.

It is preferred that the difference between the visible light reflectance of the laminated glass of the present invention and the visible light reflectance of a laminated glass that is the same as the laminated glass of the present invention except that no heat-generating conductive structure is comprised is small. When the difference is small, the laminated glass of the present invention can have excellent front visibility, and can be used suitably particularly in use applications for which good front visibility is required, such as a front glass for vehicles. The visible light reflectance of the laminated glass can be measured in accordance with JIS R 3106. The aforementioned difference can be reduced by, for example, configuring the laminated glass in such a manner that a low-reflectance-treated surface of the heat-generating conductive structure is arranged on the occupant side or the observer side of the laminated glass, or by decreasing the line width of the heat-generating conductive structure.

EXAMPLES

Hereinbelow, the present invention will be described in more detail with reference to examples. However, the present invention is not intended to be limited by the following examples in any way.

<Production of polyvinyl acetal resin film>

A polyvinyl butyral resin 1 (also referred to as a "resin 1", hereinafter) was melt-kneaded, or the resin 1 and a polyvinyl butyral resin 2 (also referred to as a "resin 2", hereinafter) were melt-kneaded together at each of mass ratios shown in Table 2. In a case where a polyvinyl acetal resin film contained a plasticizer (polyvinyl acetal resin films c, d and e), a specified amount of the plasticizer 3GO was melt-kneaded together with the resin 1 or together with the resins 1 and 2. Subsequently, a melt-kneaded product thus prepared was extruded in a strand-like shape and was then pelletized into pellets. The obtained pellets were melt-extruded with a single-screw extruder and a T-die, and then the resultant product was processed with a metallic elastic roll. In this manner, polyvinyl acetal resin films a to e (also referred to as "resin films a to e", hereinafter) each having a smooth surface were produced.
The values of the physical properties of the resins (polyvinyl butyral resins A to C) used in the production of the resin films a to e are shown in Table 1. The properties of the resin films a to e and films used for comparison purpose are shown in Table 2.

[Table 1]

| Resin | Hydroxyl group amount | Acetyl group amount | Viscosity of toluene/ethanol=1/1 solution containing resin at concentration of 10% by mass (type-B) |
|---|---|---|---|
| | mol% | mol% | mPa·s |
| A | 28.5 | 0.7 | 152 |
| B | 28.9 | 0.7 | 1410 |
| C | 20.9 | 0.8 | 133 |

[Table 2]

| Resin film | Resin 1 | Resin 2 | Resin 1 : Resin 2 (ratio of mass) | Viscosity of toluen/ethanol=1/1 solution containing resin at concentration of 10% by mass (type-B) | | | Plasticizer | Glass transition temperature Tg | Melting point Tm* | Thickness |
|---|---|---|---|---|---|---|---|---|---|---|
| | | | | Resin 1 | Resin 2 | Resin mixture | | | | |
| | | | | mPa·s | mPa·s | mPa•s | %by mass | °C | °C | μm |
| Resin film a | A | - | - | 152 | - | - | 0 | 71 | - | 50 |
| Resin film b | A | B | 75:25 | 152 | 1410 | 245 | 0 | 71 | - | 50 |
| Resin film c | A | B | 25:75 | 152 | 1410 | 783 | 18 | 40 | - | 50 |
| Resin film d | C | - | - | 133 | - | - | 17 | 38 | - | 50 |
| Resin film e | B | - | - | 1410 | - | - | 28 | 17 | - | 50 |
| Acryl film | - | - | - | - | - | - | - | 100 | 160 | 50 |
| PET film | - | - | - | - | - | - | - | - | 254 | 50 |
| *: "-" means that a melting point was not observed. | | | | | | | | | | |

In Table 2, the content of a plasticizer represents the amount of the plasticizer relative to the total amount of the resin and the plasticizer.

[Example 1]

<Production of polyvinyl acetal resin film having copper foil laminated thereon>

A copper foil which had a thickness of 7 $\mu$m and in which one surface was blacking-treated was overlaid on the polyvinyl acetal resin film a in such a direction that the blacking-treated surface (also referred to as "blackened surface", hereinafter) of the copper foil came into contact with the polyvinyl acetal resin film a. Subsequently, a laminate produced by overlaying the polyvinyl acetal resin film a and the copper foil on each other was intercalated between PET films each having a thickness of 50 $\mu$m, the resultant laminate was allowed to pass between thermal press rolls set to 120°C (pressure: 0.2 MPa, speed: 0.5 m/min), and then the PET films were detached to produce the polyvinyl acetal resin film a having the copper foil laminated thereto.

<Production of composite film having heat-generating conductive structure provided on resin film>

A dry film resist was laminated on the copper foil in the polyvinyl acetal resin film a having the copper foil laminated thereon, and then an etching-resistant pattern was formed by employing a photolithographic technique. Subsequently, the polyvinyl acetal resin film a having the copper foil laminated thereon and having the etching-resistant pattern formed thereon was immersed in a copper etching solution to form a conductive structure, and then the remaining photoresist layer was removed by the conventional method. In this manner, a composite film, which had the polyvinyl acetal resin film a and the conductive structure that was an etching structure of the copper foil and arranged on the surface of the polyvinyl acetal resin film a, was produced. The conductive structure was formed to have such a structure that copper wires (main conductive fine wires) each having a line width of 10 $\mu$m were arranged in a wavy shape at 2.0 mm intervals in a 18 cm square in such a manner that a terminal of each of the copper wires reached the upper side and the lower side of the square. Simultaneously with the formation of the conductive structure, copper wires each having a width of 20 mm and a length of 18 cm, which corresponded to main bus bars, were formed respectively at the upper side and the lower side of the square so as to be electrically connected to the terminals of the aforementioned copper wires. The composite film thus produced had an approximately circular electronic member attachment region having a radius of 2 cm and comprising no main conductive fine wire in such a manner that the periphery of the electronic member attachment region came into contact with positions respectively 6.5 cm and 10.5 cm away from the length-direction midpoint of one of the main bus bars in the width direction of the main bus bar. The average space interval between the adjacent main conductive fine wires comprised in a region within 2 cm from the periphery of the electronic member attachment region was 1.0 mm. Accordingly, the electronic member attachment region was present in the region between the two main bus bars. The schematic illustration of the configuration of the conductive structure and the main bus bars is shown in Fig. 1.

<Production of laminated glass>

The composite film thus produced was cut into a piece having a size of 18 cm long and 18 cm wide so as to comprise the conductive structure therein, and the piece was arranged on a glass having a length of 20 cm, a width of 20 cm and a thickness of 3 mm. This arrangement was performed in such a direction that a surface of the film which did not have the conductive structure came into contact with the glass and in such a manner that the conductive structure was positioned near the center of the glass. Subsequently, electrodes (copper foil tapes each having a conductive adhesive agent attached thereon) were respectively bonded to the bus bars (20 mm-wide copper wires) located at both edges of the conductive structure in such a manner that the terminals of the electrodes protruded from the periphery of the glass. Subsequently, an intermediate film for automotive front glasses having a length of 20 cm, a width of 20 cm and a thickness of 0.76 mm (which contained a polyvinyl butyral resin having a hydroxyl group amount of 29% by mole and a viscosity average polymerization degree of 1700 and 28% by mass of the plasticizer 3GO) which served as the plasticized polyvinyl acetal resin film, and a glass having a length of 20 cm, a width of 20 cm and a thickness of 3 mm were overlaid on the resultant product.

Subsequently, the product was placed in a vacuum bag, then the pressure in the vacuum bag was reduced at room temperature for 15 minutes by use of a vacuum pump, then the temperature was raised to 100°C while reducing the pressure, and then the vacuum bag was heated for 60 minutes while maintaining the temperature and pressure. After lowering the temperature, the pressure was set to ambient pressure, and then a laminated glass that had been pre-laminated was removed from the vacuum bag.

Subsequently, the laminated glass that had been pre-laminated was introduced into an autoclave, and was then treated at 140°C and 1.2 MPa for 30 minutes to produce a laminated glass.

<Evaluation of condition of conductive structure>

The condition of each of the conductive structure after etching and the conductive structure in the laminated glass after the autoclave treatment was visually observed using a loupe, and was then evaluated in accordance with the following criteria. The results are shown in Table 3.

A: Deformation and disconnection were not observed.
B: Partial deformation was observed, but disconnection was not observed.
C: A slight level of disconnection was observed.
D: Disconnection was observed notably.

<Sensory evaluation of visibility of conductive structure>

The laminated glass was placed flatly on a horizontal table located 10 cm below the horizontal eye level of an observer with 50 cm away from the observer, then the laminated glass was raised to the observer side at an angle of 45° to the upper surface of the table and was then fixed, and then two screens each having a white color and a black color were placed in front of the observer so that the laminated glass was interposed between the observer and the screens. The visibility of the conductive structure on each of the screens when observed from the low-reflectance-treated side of the conductive structure was evaluated in accordance with the following criteria. The results are shown in Table 3.

A: The main conductive fine wires were not recognized on both of the screens; visibility was good.
B: The main conductive fine wires were recognized on one of the screens; visibility was slightly poor but was sufficient for practical use.
C: The main conductive fine wires were recognized on both of the screens; visibility was poor but was acceptable for practical use.

<Evaluation of heating performance of electronic member attachment region>

A voltage of 12 V was applied to the two electrode parts in the laminated glass that was cooled at -20°C for 24 hours, and the time until the electronic member attachment region was defrosted and became transparent in such an extent that the background was visibly recognized was measured. The heating performance of the electronic member attachment region was evaluated in accordance with the following criteria. The results are shown in Table 3.

A: Within 1 minute; heating performance was extremely good.
B: Longer than 1 minute and within 3 minutes; heating performance was sufficient.
C: Longer than 3 minutes; heating performance was insufficient.

<Measurement of haze value>

An evaluation sample was produced by the same method as the laminated glass production method mentioned above, except that the used glass was changed to a glass having a length of 5 cm, a width of 5 cm and a thickness of 3 mm and that, as the composite film, a composite film was used which had a size of 5 cm long and 5 cm wide and was cut off from a part excluding both of the electronic member attachment region and a region within 2 cm from the periphery of the region in the composite film.
The haze value of the evaluation sample when irradiated with light from the blacking -treated surface side was measured in accordance with JIS R3106 using a haze meter. The results are shown in Table 3.

<Evaluation of sensitivity of camera sensor>

An specimen sample was produced by the same method as the laminated glass production method mentioned above, except that the used glass was changed to a glass having a length of 5 cm, a width of 5 cm and a thickness of 3 mm and that, as the composite film, a composite film was used which had a size of 5 cm long and 5 cm wide and was cut off from a part comprising both of the electronic member attachment region and a region within 2 cm from the periphery of the region in the composite film. In addition, a laminated glass without a composite film was produced by the same method as the laminated glass production method mentioned above, except that any composite film was not used.
The total light transmittance of the specimen sample and the total light transmittance of the laminated glass without a composite film when irradiated with light from the blacking-treated surface side were measured in accordance with JIS R3106 using a haze meter, and the difference between the total light transmittances was determined in accordance with the following formula. The sensitivity of a camera sensor was evaluated in accordance with the following criterial.

[Mathematical Formula 2]

$$\Delta T = T \text{ (laminated glass comprising composite film)} - T \text{ (laminated glass without composite film)}$$

A: ΔT was 0.5% or less; sensitivity was extremely good.
B: ΔT was larger than 0.5% and 1% or less; sensitivity was good enough.
C: ΔT was larger than 1%; sensitivity was poor.

[Example 2]

A composite film and a laminated glass were produced in the same manner as in Example 1 except that the wiring shape of the conductive structure was changed from a wavy shape to a zig-zag shape, and the same evaluations as in Example 1 were performed. The results are shown in Table 3.

[Example 3]

A composite film and a laminated glass were produced in the same manner as in Example 1 except that the polyvinyl acetal resin film b was used in place of the polyvinyl acetal resin film a, and the same evaluations as in Example 1 were performed. The results are shown in Table 3.

[Example 4]

A composite film and a laminated glass were produced in the same manner as in Example 1 except that the polyvinyl acetal resin film c was used in place of the polyvinyl acetal resin film a, and the same evaluations as in Example 1 were performed. The results are shown in Table 3.

[Example 5]

A composite film and a laminated glass were produced in the same manner as in Example 1 except that the polyvinyl acetal resin film d was used in place of the polyvinyl acetal resin film a, and the same evaluations as in Example 1 were performed. The results are shown in Table 3.

[Example 6]

A composite film and a laminated glass were produced in the same manner as in Example 1 except that the polyvinyl acetal resin film e was used in place of the polyvinyl acetal resin film a, and the same evaluations as in Example 1 were performed. The results are shown in Table 3.

[Example 7]

A composite film and a laminated glass were produced in the same manner as in Example 1 except that the line width of each of the main conductive fine wires was changed from 10 μm to 5 μm, and the same evaluations as in Example 1 were performed. The results are shown in Table 3.

[Example 8]

A composite film and a laminated glass were produced in the same manner as in Example 1 except that an acryl film shown in Table 2 was used in place of the polyvinyl acetal resin film a, and the same evaluations as in Example 1 were performed. The results are shown in Table 3.

[Example 9]

A composite film and a laminated glass were produced in the same manner as in Example 1 except that lamination of a PET film shown in Table 2 and the copper foil on each other was performed using an acrylate-based adhesive agent in place of the lamination of the polyvinyl acetal resin film a and the copper foil on each other using the thermal press rolls, and the same evaluations as in Example 1 were performed. The results are shown in Table 3.

[Example 10]

A composite film and a laminated glass were produced in the same manner as in Example 1 except that the configuration of the conductive structure and the main bus bars shown in Fig. 1 was changed to that shown in Fig. 2, and the same evaluations as in Example 1 were performed. The results are shown in Table 3.
The configuration of the conductive structure and the main bus bars employed in this Example was the same as that employed in Example 1, except that one of the main bus bars was curved in a U-shape so that an electronic member attachment region was present in a region other than the area between the two main bus bars, that the main conductive fine wires extended between the one of the main bus bars and the other main bus bar on the polyvinyl acetal resin film, and that the electronic member attachment region was not present in the region between the two main bus bars. The size of the U-shape curved part was such that the width corresponding to an opening of the U-shape was 4 cm and the length corresponding to the depth of the U-shape was 2 cm.

[Example 11]

A composite film and a laminated glass were produced in the same manner as in Example 1 except that the configuration of the conductive structure was changed from the configuration shown in Fig. 1 to the configuration shown in Fig. 3 and that two auxiliary bus bars were further arranged so as to surround 1/4 or more of the periphery of an electronic member attachment region present in the region between the two main bus bars, in other words, two auxiliary bus bars were formed so as to surround 1/4 or more of the periphery of an approximately rectangular electronic member attachment region that was located around the approximately circular electronic member attachment region shown in Fig. 1, and the same evaluations as in Example 1 were performed. The results are shown in Table 3.
Each of the two auxiliary bus bars was formed from a copper wire having a width of 20 mm and a length of 4 cm, the two auxiliary bus bars were parallel to the two main bus bars, the two auxiliary bus bars were apart from one of the main bus bars by 6.5 cm and 10.5 cm, respectively, the two auxiliary bus bars were respectively electrically connected to the adjacent two main bus bars through the main conductive fine wires, and the terminals of the two auxiliary bus bars were electrically connected to each other through the main conductive fine wires.

[Example 12]

A composite film and a laminated glass were produced in the same manner as in Example 1 except that the configuration of the conductive structure was changed from the configuration shown in Fig. 1 to the configuration shown in Fig. 4 and that one square-shaped auxiliary bus bar was arranged so as to surround 1/4 or more of the periphery of an electronic member attachment region present in the region between the two main bus bars, in other words, one square-shaped auxiliary bus bar was formed so as to surround the periphery of a square-shaped electronic member attachment region that was located around the approximately circular electronic member attachment region shown in Fig. 1, and the same evaluations as in Example 1 were performed. The results are shown in Table 3.
The auxiliary bus bar was formed from a copper wire having a width of 20 mm, the electronic member attachment region in the auxiliary bus bar had a size of 4 cm long and 4 cm wide, two sides of the square-shaped auxiliary bus bar were parallel to the two main bus bars, and the two sides of the auxiliary bus bar were respectively electrically connected to the adjacent two main bus bars through the main conductive fine wires.

[Example 13]

A composite film and a laminated glass were produced in the same manner as in Example 1 except that the configuration of the conductive structure was changed from the configuration shown in Fig. 1 to the configuration shown in Fig. 5 and that one circular auxiliary bus bar was arranged so as to surround 1/4 or more of the periphery of an electronic member attachment region present in the region between the two main bus bars, in other words, one circular auxiliary bus bar was formed so as to surround the periphery of a circular electronic member attachment region that was located around the approximately circular electronic member attachment region shown in Fig. 1, and the same evaluations as in Example 1 were performed. The results are shown in Table 3.

The auxiliary bus bar was formed from a copper wire having a width of 20 mm, the electronic member attachment region in the auxiliary bus bar had a circular shape having a diameter of 4 cm, and portions of the arc of the auxiliary bus bar were respectively electrically connected to the adjacent two main bus bars through the main conductive fine wires.

[Example 14]

A composite film and a laminated glass were produced in the same manner as in Example 1 except that the wiring shape of the conductive structure was changed from a wavy shape to a straight line-shape, and the same evaluations as in Example 1 were performed. The results are shown in Table 3.

[Example 15]

A composite film and a laminated glass were produced in the same manner as in Example 1 except that the average space interval between the adjacent main conductive fine wires comprised in a region within 2 cm from the periphery of the electronic member attachment region was changed from 1.0 mm to 2.0 mm, and the same evaluations as in Example 1 were performed. The results are shown in Table 3.

[Example 16]

The polyvinyl acetal resin film a was cut into a piece having a size of 18 cm long and 18 cm wide, and the piece was placed on a glass having a length of 20 cm, a width of 20 cm and a thickness of 3 mm. Tungsten wires each having a line width of 15 $\mu$m were arranged on the polyvinyl acetal resin film a in a pattern shown in Table 3. Subsequently, copper foils each having a width of 20 mm were arranged as bus bars at terminals of the tungsten wires, and then electrodes (copper foil tapes each having a conductive adhesive agent attached thereon) were respectively bonded to the bus bars in such a manner that the terminals of the electrodes protruded from the periphery of the glass. Subsequently, an intermediate film for automotive front glasses having a length of 20 cm, a width of 20 cm and a thickness of 0.76 mm (which contained a polyvinyl butyral resin having a hydroxyl group amount of 29% by mole and a viscosity average polymerization degree of 1700 and 28% by mass of the plasticizer 3GO) which served as a plasticized polyvinyl acetal resin film and a glass having a length of 20 cm, a width of 20 cm and a thickness of 3 mm were overlaid on the resultant product
Subsequently, a laminated glass was produced in the same manner as in Example 1, and the same evaluations as in Example 1 were performed. The results are shown in Table 3.

[Example 17]

A composite film and a laminated glass were produced in the same manner as in Example 1 except that the average space interval between the adjacent main conductive fine wires was changed from 2.0 mm to 4.0 mm and that the average space interval between the adjacent main conductive fine wires comprised in a region within 2 cm from the periphery of the electronic member attachment region was changed from 1.0 mm to 4.0 mm, and the same evaluations as in Example 1 were performed. The results are shown in Table 3.

[Comparative Example 1]

A laminated glass was produced in the same manner as in Example 1 except that the polyvinyl acetal resin film a was used in place of the composite film. In this Comparative Example, no conductive structure was present. The same evaluations as in Example 1 were performed, except that a region corresponding to the position of the electronic member attachment region in the laminated glass or the specimen sample produced in Example 1 was evaluated in "Evaluation of heating performance of electronic member attachment region" and "Measurement of haze value" and "Evaluation of sensitivity of camera sensor". The results are shown in Table 3.

[Comparative Example 2]

A composite film and a laminated glass were produced in the same manner as in Example 1, except that the configuration of the conductive structure was changed from the configuration shown in Fig. 1 to the configuration shown in Fig. 6, in other words, the configuration of the conductive structure was changed to such a configuration that the composite film had no electronic member attachment region. In this Comparative Example, no electronic member attachment region was present. The same evaluations as in Example 1 were performed, except that a part corresponding to the position of the electronic member attachment region in the laminated glass or the specimen sample produced in Example 1 was evaluated in "Evaluation of heating performance of electronic member attachment region" and "Evaluation of sensitivity of camera sensor". The results are shown in Table 3.

[Table 3]

| | Resin film | | Conductive structure | | | | | | Evaluation of condition of conductive structure after etching | Evaluation of condition of conductive structure in laminated glass | Visibility of conductive structure | Heating performance of electronic member attachment region | Haze | Evaluation of sensitivity of camera sensor |
|---|---|---|---|---|---|---|---|---|---|---|---|---|---|---|
| | Type | Thickness (μm) | Conductive material | Wiring pattern | Wiring shape | Line width (μm) | Average space interval (mm) | Average space interval in region within 2 cm from periphery of electronic member attachment region (mm) | | | | | | |
| Example 1 | a | 50 | Copper | Fig. 1 | Wavy shape | 10 | 2.0 | 1.0 | A | B | B | A | 1.1 | A |
| Example 2 | a | 50 | Copper | Fig. 1 | Zig-zag shape | 10 | 2.0 | 1.0 | A | B | B | A | 1.1 | A |
| Example 3 | b | 50 | Copper | Fig. 1 | Wavy shape | 10 | 2.0 | 1.0 | A | A | B | A | 12 | A |
| Example 4 | c | 50 | Copper | Fig. 1 | Wavy shape | 10 | 2.0 | 1.0 | A | B | B | A | 1.0 | A |
| Example 5 | d | 50 | Copper | Fig. 1 | Wavy shape | 10 | 2.0 | 1.0 | A | B | B | A | 1.2 | A |
| Example 6 | e | 50 | Copper | Fig. 1 | Wavy shape | 10 | 2.0 | 1.0 | C | C | B | A | 0.9 - | A |
| Example 7 | a | 50 | Copper | Fig. 1 | Wavy shape | 5 | 2.0 | 1.0 | A | B | A | A | 1.0 | A |
| Example 8 | Acryl film | 50 | Copper | Fig. 1 | Wavy shape | 10 | 2.0 | 1.0 | A | A | B | A | 1.5 | A |
| Example 9 | PET film | 50 | Copper | Fig. 1 | Wavy shape | 10 | 2.0 | 1.0 | A | A | B | A | 2.5 | B |
| Example 10 | a | 50 | Copper | Fig. 2 | Wavy shape | 10 | 2.0 | - | A | B | B | B | 1.1 | A |

(continued)

| | Resin film | | Conductive structure | | | | | | Evaluation of condition of conductive structure after etching | Evaluation of condition of conductive structure in laminated glass | Visibility of conductive structure | Heating performance of electronic member attachment region | Haze | Evaluation of sensitivity of camera sensor |
|---|---|---|---|---|---|---|---|---|---|---|---|---|---|---|
| | Type | Thickness ($\mu$m) | Conductive material | Wiring pattern | Wiring shape | Line width ($\mu$m) | Average space interval (mm) | Average space interval in region within 2 cm from periphery of electronic member attachment region (mm) | | | | | | |
| Example 11 | a | 50 | Copper | Fig. 3 | Wavy shape | 10 | 2.0 | - | A | B | B | B | 1.1 | A |
| Example 12 | a | 50 | Copper | Fig. 4 | Wavy shape | 10 | 2.0 | - | A | B | B | B | 1.1 | A |
| Example 13 | a | 50 | Copper | Fig. 5 | Wavy shape | 10 | 2.0 | - | A | B | B | B | 1.1 | A |
| Example 14 | a | 50 | Copper | Fig. I | Straight line-shape | 10 | 2.0 | 1.0 | A | C | B | A | 1.1 | A |
| Example 15 | a | 50 | Copper | Fig. 1 | Wavy shape | 10 | 2.0 | 2.0 | A | B | B | B | 1.1 | A |
| Example 16 | a | 50 | Tungsten | Fig. 1 | Wavy shape | 15 | 2.0 | 1.0 | A | A | C | A | 1.5 | A |
| Example 17 | a | 50 | Copper | Fig. 1 | Wavy shape | 10 | 4.0 | 4.0 | A | B | B | C | 1.0 | A |
| Comparative Example 1 | a | 50 | - | | | - | - | - | - | - | A | C | 0.5 | A |
| Comparative Example 2 | a | 50 | Copper | Fig. 6 | Wavy shape | 10 | 2.0 | - | A | B | B | A | 1.1 | C |

In each of the laminated glasses produced in Examples 1 to 17, it was found that the heating of the whole area of the laminated glass was achieved and the efficient heating was also achieved in the electronic member attachment region while keeping the good sensitivity of the electronic member. It was also found that the heating efficiency in the periphery of the electronic member was further improved by arranging the conductive fine wires at higher density in the periphery of the electronic member attachment region (Examples 1 to 9, 14 and 16) and that good front visibility, the elimination of the necessity of application of a black paint and the improvement in flexibility of positioning of the electronic member in the laminated glass were achieved by providing the conductive fine wires having smaller line widths (Examples 1 to 15 and 17). Furthermore, it was also found that extremely good sensitivity of the electronic member was achieved by configuring the laminated glass so as to achieve the desired haze value (Examples 1 to 8 and 10 to 17).

In contrast, in the laminated glass produced in Comparative Example 1, although good sensitivity of the electronic member and good front visibility were achieved, the heating of the whole area of the laminated glass and the efficient heating of the electronic member attachment region were not achieved. In the laminated glass produced in Comparative Example 2, although the heating of the whole area of the laminated glass and the efficient heating of the region around the electronic member were achieved, good sensitivity of the electronic member was not achieved.

DESCRIPTION OF REFERENCE SIGNS

1: Main bus bar
2: Main conductive fine wire
3: Electronic member attachment region
5: Auxiliary bus bar
6: Other eight regions
7: Region respectively contacting with two main bus bars
10: Projected cross-sectional area of main bus bar
20: Projected cross-sectional area of main conductive fine wire
40: Projected cross-sectional area of auxiliary conductive fine wire

**Claims**

**1.** A composite film comprising:

a resin film; and
a heat-generating conductive structure arranged on the resin film and comprising at least a plurality of main conductive fine wires,

wherein the composite film has at least one electronic member attachment region not comprising the plurality of main conductive fine wires.

**2.** The composite film according to claim 1, wherein two main bus bars are arranged at opposing positions to each other on the resin film, and the main bus bars each are electrically connected to terminals of the plurality of main conductive fine wires.

**3.** The composite film according to claim 1 or 2, wherein each of the plurality of main conductive fine wires extends in a non-linear shape on the resin film.

**4.** The composite film according to claim 3, wherein the non-linear shape is a wholly or partly wavy shape and/or a wholly or partly zig-zag shape.

**5.** The composite film according to any one of claims 1 to 4, wherein at least one surface of the heat-generating conductive structure is low-reflectance-treated.

**6.** The composite film according to any one of claims 2 to 5, wherein at least one of the electronic member attachment regions is present in a region between the two main bus bars.

**7.** The composite film according to any one of claims 2 to 5, wherein at least one of the electronic member attachment regions is present in a region other than the region between the two main bus bars.

8. The composite film according to any one of claims 1 to 7,
wherein the heat-generating conductive structure further comprises auxiliary conductive fine wires each of which electrically connects adjacent two of the main conductive fine wires to each other, and
wherein two or more of approximately rectangular or trapezoidal regions, each formed by two sides composed of adjacent two of the main conductive fine wires and two sides composed of adjacent two of the auxiliary conductive fine wires which are present between the two sides composed of adjacent two of the main conductive fine wires, have different shapes from each other.

9. The composite film according to any one of claims 2 to 8, wherein, in the region between the two main bus bars, an average space interval between the adjacent main conductive fine wires comprised in a region within 2 cm from the periphery of the electronic member attachment region present in the region between the two main bus bars is smaller than an average space interval between the adjacent main conductive fine wires comprised in the whole area of the composite film.

10. The composite film according to any one of claims 2 to 9, wherein the average space interval between the adj acent main conductive fine wires comprised in a region within 2 cm from the periphery of the electronic member attachment region present in the region between the two main bus bars is 0.1 mm or more and 5 mm or less.

11. The composite film according to any one of claims 2 to 10, wherein a portion of the main bus bar is curved so as to surround 1/4 or more of the periphery of the electronic member attachment region.

12. The composite film according to any one of claims 2 to 11, wherein at least one auxiliary bus bar is further arranged on the resin film so as to surround 1/4 or more of the periphery of the electronic member attachment region present in the region between the two main bus bars, and wherein the at least one auxiliary bus bar is electrically connected to the two main bus bars through the main conductive fine wires.

13. The composite film according to any one of claims 1 to 12, wherein the thickness of the resin film is 0.3 mm or less.

14. The composite film according to any one of claims 1 to 13, wherein the highest temperature among the melting point and the glass transition temperature of a resin composition constituting the resin film is 30°C or higher and 180°C or lower.

15. The composite film according to any one of claims 2 to 14, wherein the thickness of each connecting part between the main conductive fine wire and the main bus bar is smaller than a total of the thickness of the main conductive fine wire and the thickness of the main bus bar.

16. The composite film according to any one of claims 1 to 15, wherein the heat-generating conductive structure consists of an etching structure of a metal foil.

17. A laminated glass comprising the composite film according to any one of claims 1 to 16 intercalated between at least two glasses.

18. The laminated glass according to claim 17, wherein a camera, a sensor or an antenna is attached to the electronic member attachment region.

Figure 1

Figure 2

Figure 3

Figure 4

Figure 5

Figure 6

Total of projected cross-sectional areas of main conductive fine wires

Total of projected cross-sectional areas of auxiliary conductive fine wires

Figure 7

Figure 8

## INTERNATIONAL SEARCH REPORT

| International application No. |
|---|
| PCT/JP2018/048296 |

**A. CLASSIFICATION OF SUBJECT MATTER**
Int.Cl. H05B3/20(2006.01)i, B60J1/00(2006.01)i, B60S1/02(2006.01)i,
    C03C27/12(2006.01)i, H05B3/84(2006.01)i

According to International Patent Classification (IPC) or to both national classification and IPC

**B. FIELDS SEARCHED**

Minimum documentation searched (classification system followed by classification symbols)
Int.Cl. H05B3/20-3/86, B60J1/00-1/20, B60J10/04, B60S1/00-168,
    C03C27/00-29/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2010-186566 A (FUJIFILM CORP.) 26 August 2010, paragraphs [0020]-[0107], fig. 1, 5-6, 9 (Family: none) | 1-4, 7<br>5-18 |
| Y | JP 2016-143914 A (DAINIPPON PRINTING CO., LTD.) 08 August 2016, paragraphs [0041]-[0063], fig. 5, 12 (Family: none) | 5-18 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 March 2019 (12.03.2019) | 26 March 2019 (26.03.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2018/048296 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2017-112105 A (DAINIPPON PRINTING CO., LTD.) 22 June 2017, paragraphs [0034]-[0039], fig. 4 & EP 3379897 A1, paragraphs [0299]-[0302], fig. 47 & WO 2017/086381 A1 & CN 108293275 A | 8-18 |
| Y | JP 2009-017236 A (NIPPON SHEET GLASS CO., LTD.) 22 January 2009, paragraphs [0023]-[0026], fig. 2 (Family: none) | 9-18 |
| Y | JP 2010-251230 A (FUJIFILM CORP.) 04 November 2010, paragraphs [0137]-[0142], fig. 8 (Family: none) | 11-18 |
| Y | JP 2017-517097 A (SAINT-GOBAIN GLASS FRANCE) 22 June 2017, paragraphs [0150]-[0152], fig. 9-10 & US 2017/0019955 A1, paragraphs [0256]-[0260], fig. 9-10 & WO 2015/158462 A1 | 12-18 |
| Y | JP 2016-119227 A (HSK CO., LTD.) 30 June 2016, paragraphs [0016]-[0018], fig. 1 & WO 2016/104387 A1 | 15-18 |
| Y | JP 2017-073751 A (PANASONIC IP MANAGEMENT CO., LTD.) 13 April 2017, paragraph [0020], fig. 5 (Family: none) | 18 |
| Y | WO 2017/110206 A1 (DENSO CORP.) 29 June 2017, paragraph [0018], fig. 2 & JP 2017-114154 A | 18 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010534588 A
- JP 2013503424 A
- EP 1527107 B1
- WO 2004063231 A1
- EP 1606325 A1
- WO 2003020776 A1
- EP 1235683 B1